(19) Europäisches Patentamt
European Patent Office
Office européen des brevets

(11) Veröffentlichungsnummer: **0 181 292**
**B1**

(12) **EUROPÄISCHE PATENTSCHRIFT**

(45) Veröffentlichungstag der Patentschrift: **25.07.90**

(21) Anmeldenummer: **85810510.9**

(22) Anmeldetag: **04.11.85**

(51) Int. Cl.$^5$: **D 06 P 3/24,** C 09 B 62/004, C 09 B 67/22

# (54) Verfahren zum Kontinuierlichen Trichromie-Färben von synthetischen Polyamidmaterialien.

(30) Priorität: **08.11.84 US 669549**

(43) Veröffentlichungstag der Anmeldung: **14.05.86 Patentblatt 86/20**

(45) Bekanntmachung des Hinweises auf die Patenterteilung: **25.07.90 Patentblatt 90/30**

(84) Benannte Vertragsstaaten: **CH DE FR GB IT LI NL**

(56) Entgegenhaltungen:
**EP-A-0 089 004**
**EP-A-0 092 512**
**EP-A-0 099 859**
**EP-A-0 135 198**
**DE-A-2 243 865**
**DE-B-1 016 230**
**GB-A-1 009 955**

(73) Patentinhaber: **CIBA-GEIGY AG**
**Klybeckstrasse 141**
**CH-4002 Basel (CH)**

(72) Erfinder: **Bowles, James Benjamin**
**438 East Radiance Drive**
**Greensboro, N.C. 27403 (US)**
Erfinder: **White, Marshall, Dr. Jr.**
**4110 Ponce De Leon Drive**
**High Point, N.C. 27260 (US)**
Erfinder: **Püntener, Alois, Dr.**
**Pulverweg 13**
**CH-4310 Rheinfelden (CH)**
Erfinder: **Adam, Jean-Marie, Dr.**
**Rue de Village Neuf 60 D**
**F-68300 Rosenau (FR)**
Erfinder: **Loew, Peter, Dr.**
**Concordiastrasse 23**
**CH-4142 Münchenstein (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die vorliegende Erfindung betrifft ein Verfahren zum kontinuierlichen Trichromie-Färben von synthetischen Polyamidmaterialien mit Farbstoffmischungen, die mindestens einen blaufärbenden, faserreaktiven, sulfogruppenhaltigen Anthrachinonfarbstoff der nachfolgenden Formeln (1) und (2), mindestens einen rotfärbenden, sulfgruppenhaltigen Azofarbstoff der nachfolgenden Formel (3) und mindestens einen gelb- oder orangefärbenden, sulfogruppenhaltigen Azofarbstoff der nachfolgenden Formeln (4), (5) und (6) enthalten, die die genannte Farbstoffmischung enthaltende wässrige Färbeflotte sowie das unter Verwendung dieser Färbeflotte gefärbte Polyamid-Material.

Bei Trichromie-Färbungen auf synthetischen Polyamidmaterialien wird immer wieder eine den heutigen Anforderungen nicht genügende Ozonechtheit der Färbungen festgestellt; zudem erfüllen die beim Trichromie-Färben verwendeten Forbstoffe nicht alle heutigen Anforderungen bezüglich Farbaufbau, Aufziehverhalten, Nuancenkonstanz, Echtheiten und Kombinierbarkeit.

Aus der EP—A—92 512 sind bereits Trichromie-Farbstoffmischungen bekannt, die die Farbstoffe der nachfolgenden Formeln (15), (16) und (19) bzw. (15), (16), (17) und (19) enthalten.

Aus der EP—A—99 859 sind Trichromie-Farbstoffmischungen bekannt, die die Farbstoffe der nachfolgenden Formeln (15) und (19) enthalten. Die bekannten Trichromie-Farbstoffmischungen genügen jedoch nicht allen angegebenen Anforderungen.

Die der vorliegenden Erfindung zugrundeliegende Aufgabe war es, ein verbessertes Verfahren zum Färben von synthetischen Polyamidmaterialien mit zur Kombination nach dem Trichromie-Prinzip geeigneten Farbstoffen zu finden, welches Färbungen von insbesondere sehr guter Ozonechtheit ergibt.

Es wurde nun gefunden, dass man diese Aufgabe erfindungsgemäss durch dass nachfolgend beschriebene Verfahren lösen kann.

Die in dem erfindungsgemässen Verfahren verwendeten Farbstoffe zeichnen sich beim Trichromie-Färben durch gleichmässigen Farbaufbau, gutes Aufziehverhalten, gute Nuancenkonstanz auch in verschiedenen Konzentrationen, gute Echtheiten und gute Kombinierbarkeit aus. Die so erhaltenen Färbungen genügen den gestellten Anforderungen bezüglich Ozonechtheit.

Gegenstand der vorliegenden Erfindung ist somit ein Verfahren zum kontinierlichen Trichromie-Färben von synthetischen Polyamidmaterialien, welches dadurch gekennzeichnet ist, dass man diese Materialien mit einer Färbeflotte kontinuierlich behandelt, welche mindestens einen faserreaktiven blauen Farbstoff der Formel

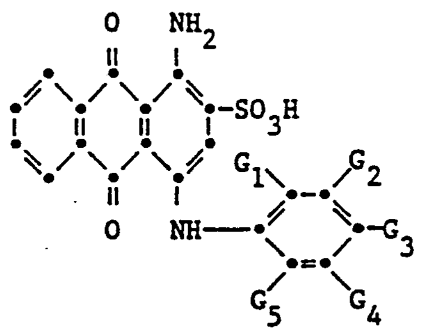

(1) ,

worin $G_1$, $G_3$ und $G_5$ Methyl, $G_4$ α,β-Dibrompropionylaminomethyl, α-Chlor- oder α-Bromacryloylaminomethyl, β-(β'-Sulfatoäthylsulfonyl)-propionylaminomethyl, α,β-Dibrompropionylamino, —CH(COOH)—NH—CO—CHBr—$CH_2$Br oder Chloracetylaminomethyl und $G_2$ Wasserstoff, Sulfo oder Chloracetylaminomethyl oder —CH(COOH)—NH—CO—CHBr—$CH_2$Br ist, oder worin $G_1$ Wasserstoff oder Methoxy, $G_2$, $G_3$ und $G_5$ Wasserstoff und $G_4$ Sulfatoäthylsulfonyl, Chloracetylamino, α,β-Dibrompropionylamino, Vinylsulfonyl, 2-Methoxy-4-fluor-s-triazinylamino oder 2-Aethylamino-4-fluor-s-triazinylamino ist, oder worin $G_1$, $G_2$, $G_4$ und $G_5$ Wasserstoff und $G_3$ Chloracetylamino oder α,β-Dibrompropionylamino, 2,6-Difluor-5-chlorpyrimidin-4-ylamino, 2-Chlor-4-amino- oder 4-N,N-Dimethylamino-s-triazinylamino ist, oder worin $G_1$ Methyl, $G_2$ β-Sulfatoäthylsulfonyl und $G_3$, $G_4$ und $G_5$ Wasserstoff ist, oder worin $G_1$ oder $G_2$ Sulfo, $G_3$ α-Bromacryloylamino oder N-Methyl-N-[3-(β-chloräthylsulfonylbenzoyl]-amino und $G_2$ oder $G_1$ und $G_4$ und $G_5$ Wasserstoff ist, oder $G_1$, $G_2$ und $G_5$ Wasserstoff, $G_3$ Methyl und $G_4$ Chloracetylamino ist, oder worin $G_1$ Methyl, $G_2$ 2,6-Difluor-5-chlorpyrimidinylamino, $G_4$ Sulfo und $G_3$ und $G_5$ Wasserstoff ist, oder mindestens einen faserreaktiven blauen Farbstoff der Formel

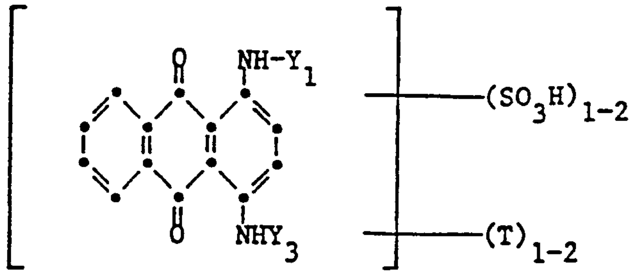

(2) ,

worin $Y_1$ Cyclohexyl, $Y_3$ 4-(4′-Methylphenoxy)-phenyl und T Chloracetylaminomethyl ist und der Farbstoff eine einzige Sulfonsäuregruppe enthält, oder worin $Y_1$ Isopropyl und $Y_3$ ein Phenyl-sek.butylrest ist, der im Phenylring durch Sulfo und Chloracetylaminomethyl substituiert ist, oder ein Diphenylätherrest ist, der im Phenoxyrest durch Sulfo und Acryloylaminomethylsubstituiert ist, oder worin $Y_1$ und $Y_3$ je einen Phenyl-sek.-butylrest bedeuten, der im Phenylring durch Sulfo und Chloracetylaminomethyl substituiert ist, oder worin $Y_1$ und $Y_3$ je einen 4-α-Bromacryloylamino-3-sulfophenylrest bedeuten, zusammen mit mindestens einem roten Farbstoff der Formel

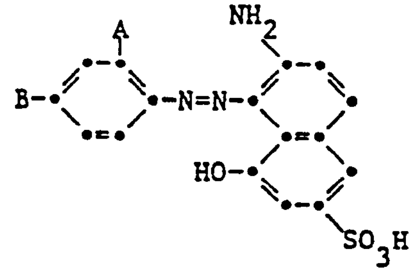

(3) ,

worin A Wasserstoff, gegebenenfalls substituiertes $C_{1-4}$-Alkyl,

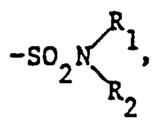, 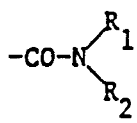 oder $-SO_2R_3$

ist, wobei $R_1$ $C_{1-4}$-Alkyl, $R_2$ gegebenenfalls substituiertes $C_{5-7}$-Cycloalkyl oder gegebenenfalls substituiertes Phenyl und $R_3$ gegebenenfalls substituiertes Phenyl oder gegebenenfalls substituiertes Phenoxy ist, und B Wasserstoff, Halogen, $C_{2-4}$-Alkanoylamino, $C_{5-8}$-Cycloalkoxycarbonylamino, $C_{1-4}$-Alkoxycarbonylamino, $C_{1-4}$-Alkylsulfonylamino oder gegebenenfalls substituiertes Phenylsulfonylamino bedeutet, und mindestens einem gelben oder orangen Farbstoff der Formeln

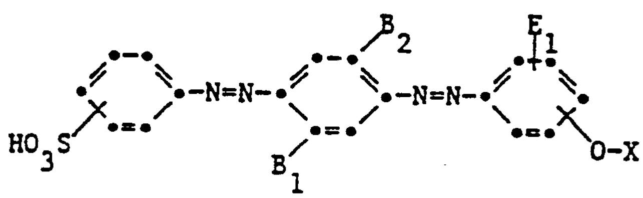

(4) ,

worin $B_1$, $B_2$ und $E_1$ Wasserstoff, $C_{1-4}$-Alkyl oder $C_{1-4}$-Alkoxy und X geradkettiges oder verzweigtes $C_{1-4}$-Alkyl oder geradkettiges oder verzweigtes $C_{2-4}$-Hydroxyalkyl bedeuten, oder

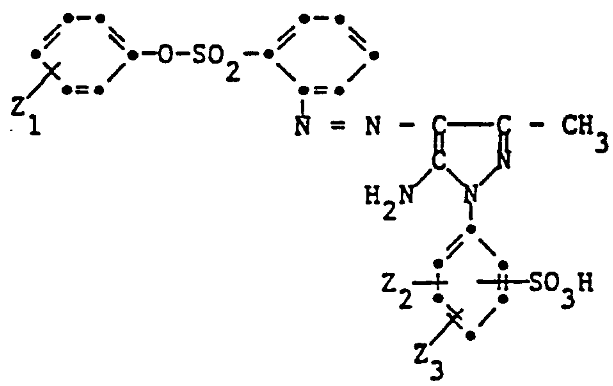

(5) ,

worin $Z_1$, $Z_2$ und $Z_3$ unabhängig voneinander Wasserstoff, Halogen, $C_{1-4}$-Alkyl oder $C_{1-4}$-Alkoxy bedeuten, oder Mischungen von Farbstoffen der Formeln (4) und (5), oder einem gelben Farbstoff der Formel

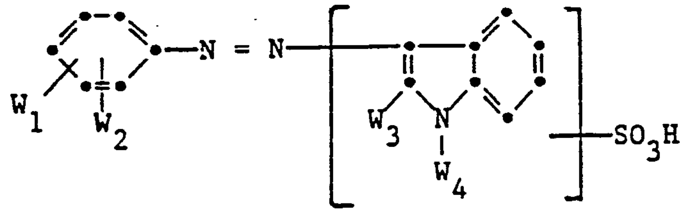 (6) ,

worin $W_1$ Wasserstoff, $C_{1-4}$-Alkyl, $C_{1-4}$-Alkoxy, Halogen, $C_{2-4}$-Alkanoylamino oder ein gegebenenfalls substituierten Arylsulfonyl, Aryloxy- oder Arylcarbonylrest, $W_2$ Wasserstoff, Halogen, einen gegebenenfalls substituierten Alkyl-, Aryloxy- oder Aryloxysulfonylrest oder ein Rest der Formel

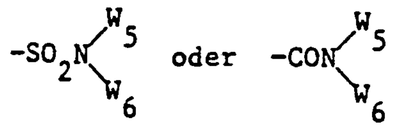 ,

ein gegebenenfalls substituierter Alkyl- oder Arylrest, $W_4$ Wasserstoff oder Alkyl und $W_5$ und $W_6$ unabhängig voneinander Wasserstoff oder ein gegebenenfalls substituierter Alkyl-, Cycloalkyl- oder Arylrest ist, sowie Wasser und gegebenenfalls weitere Zusätze enthält.

Weiterer Gegenstand der vorliegenden Erfindung ist die oben genannte Farbstoffmischung enthaltende wässrige Färbeflotte sowie das unter Verwendung dieser Färbeflotte gefärbte Polyamid-Material.

Unter Trichromie ist die additive Farbmischung passend gewählter gelbe-bzw. orange-, rot- und blaufärbender Farbstoffe zu verstehen, mit denen jede gewünschte Nuance des sichtbaren Farbspektrum durch geeignete Wahl der Mengenverhältnisse der Farbstoffe eingestellt werden kann.

Mit dem erfindungsgemässen Verfahren werden Färbungen von guter bis sehr guter Ozonechtheit erhalten.

Unter faserreaktiven Resten sind solche zu verstehen, die mit den Hydroxygruppen der Cellulose, den Amino-, Carboxy-, Hydroxy- und Thiolgruppen bei Wolle und Seide, oder mit den Amino- und eventuell Carboxygruppe von synthetischen Polyamiden unter Bildung kovalenter chemischer Bindungen zu reagieren vermögen.

Als Alkylreste kommen für A, $B_1$, $B_2$, $E_1$, $R_1$, X, $Z_1$, $Z_2$ und $Z_3$ in den Formeln (3), (4) und (5) unabhängig voneinander geradkettige oder verzweigte Alkylreste in Betracht, wie beispielsweise Methyl, Aethyl, Propyl, Isopropyl, Butyl, sek.-Butyl, Isobutyl und tert.-Butyl.

Der Rest A also Alkylrest kann substituiert sein z.B. durch Halogen, wie Chlor oder Brom und insbesondere Fluor, vorzugsweise ist A als Alkylrest ein $C_{1-4}$-Perfluoralkylrest, insbesondere der Trifluormethylrest.

Als gegebenenfalls substituierter Phenylrest kommt für $R_2$ und $R_3$ ein durch $C_{1-4}$-Alkyl, $C_{1-4}$-Alkoxy oder Halogen substituierter Phenylrest in Betracht; vorzugsweise ist $R_2$ oder $R_3$ ein unsubstituierter Phenylrest.

Als gegebenenfalls substituierter Phenoxyrest kommt für $R_3$ ein durch $C_{1-4}$-Alkyl, insbesondere Methyl, $C_{1-4}$-Alkoxy oder Halogen, insbesondere Chlor, substituierter Phenoxyrest in Betracht; vorzugsweise ist $R_3$ als Phenoxyrest ein unsubstituierter oder durch Chlor substituierter Phenoxyrest.

Als Halogen kommt für B, $Z_1$, $Z_2$ und $Z_3$ in den Formeln (3) und (5), Fluor oder Brom und insbesondere Chlor in Betracht.

Als $C_{2-4}$-Alkanoylamino kommt für B in Formel (3) beispielsweise der Acetylamino-, Propionylamino- oder Butyrylaminorest in Betracht.

Als $C_{5-8}$-Cycloalkoxycarbonylamino kommt für B insbesondere der Cyclohexyloxycarbonylaminorest in Betracht.

Als $C_{1-4}$-Alkylsulfonylamino kommt für B der Methyl-, Aethyl-, Propyl-, Isopropyl-, Butyl-, tert.-Butyl-, Isobutyl- oder sek.-Butylsulfonylaminorest in Betracht.

Als Phenylsulfonylaminorest kommt für B ein durch $C_{1-4}$-Alkyl, $C_{1-4}$-Alkoxy oder Halogen substituierter Phenylsulfonylaminorest in Betracht; vorzugsweise eine unsubstituierter oder durch Methyl substituierter Phenylsulfonylaminorest.

Als Alkoxyreste kommen für $B_1$, $B_2$, $E_1$, $Z_1$, $Z_2$ und $Z_3$ in den Formeln (4) und (5) beispielsweise der Methoxy-, Aethoxy, Propoxy, Isopropoxy-, Butoxy-, sek.-Butoxy-, Isobutoxy- oder tert.-Butyoxyrest in Betracht.

Als Hydroxyalkylrest kommit für X in formel (4) ein geradkettiger oder verzweigter Hydroxyalkylrest in Betracht, wie beispielsweise β-Hydroxyäthyl-, β-Hydroxpropyl-, β-Hydroxybutyl- oder der α-Aethyl-β-hydroxyäthylrest.

Bedeutet $W_1$ $C_{1-4}$-Alkyl, so handelt es sich um Methyl, Aethyl, n-Propyl, Isopropyl, n-Butyl, sek.-Butyl,

Isobutyl oder tert.-Butyl.

Bedeutet $W_1$ $C_{1-4}$-Alkoxy, so handelt es sich um Methoxy, Aethoxy, n-Propoxy, Isopropoxy, n-Butoxy, sek.-Butoxy, Isobutoxy oder tert.-Butoxy.

Bedeutet $W_1$ $C_{2-4}$-Alkanoylamino, so handelt es sich beispielsweise um Acetylamino, Propionylamino oder Butyrylamino.

Bedeutet $W_1$ einen gegebenenfalls substituierten Arylsulfonyl-, Aryloxy- oder Arylcarbonylrest, so bedeutet Aryl vorzugsweise einen Rest der Benzol- oder Naphthalinreihe, der weitersubstituiert sein kann, beispielsweise durch $C_{1-4}$-Alkylgruppen, wie Methyl und Aethyl, $C_{1-4}$-Alkoxygruppen, wie Methoxy und Aethoxy, Halogen, wie Fluor, Chlor und Brom, Alkanoylaminogruppen mit 1 bis 6 Kohlenstoffatomen, wie Acetylamino, und Hydroxy.

Bedeutet $W_1$ und/oder $W_2$ Halogen, so handelt es sich um Fluor, Chlor oder Brom.

Bedeutet $W_2$ einen gegebenenfalls substituierten Aryloxy- oder Aryloxysulfonylrest, so bedeutet Aryl einen Rest der Benzol- oder Naphthalinreihe, der weitersubstituiert sein kann, beispielsweise durch $C_{1-4}$-Alkylgruppen, wie Methyl und Aethyl, $C_{1-4}$-Alkoxygruppen, wie Methoxy und Aethoxy, Halogen, wie Fluor, Chlor und Brom, Alkanoylaminogruppen mit 1 bis 6 Kohlenstoffatomen, wie Acetylamino, und Hydroxy.

Bedeuten $W_2$, $W_3$, $W_5$ oder $W_6$ einen gegebenenfalls substituierten Alkylrest, so handelt es sich unabhängig voneinander vorzugsweise um einen geradkettigen oder verzweigten $C_{1-12}$-Alkyl- insbesondere $C_{1-4}$-Alkylrest, der weitersubstituiert sein kann, z.B. durch Halogen, wie Fluor, Chlor oder Brom, Hydroxy, Cyano, $C_{1-4}$-Alkoxy, wie Methoxy oder Aethoxy, und Alkanoylgruppen mit 1 bis 6 Kohlenstoffatomen, wie die Acetyl- oder Propionylgruppe, und die Benzoylgruppe. Der Alkylrest $W_3$ kann auch durch Sulfo substituiert sein. Als Beispiele für $W_2$, $W_3$, $W_5$ und $W_6$ als Alkylrest seien genannt: Methyl, Aethyl, Propyl, Isopropyl, Butyl, sek.-Butyl, tert.-Butyl, Isobutyl und Trifluormethyl.

Bedeuten $W_3$, $W_5$ und $W_6$ einen gegebenenfalls substituierten Arylrest, so gehört unabhängig voneinander vorzugsweise der Benzol- oder Naphthalinreihe an, er kann weitersubstituiert sein, beispeilsweise durch $C_{1-4}$-Alkylgruppen, wie Methyl, $C_{1-4}$-Alkoxygruppen, wie Methoxy und Aethoxy, Halogen, wie Fluor, Chlor oder Brom, Trifluormethyl, Alkanoylaminogruppen mit 1 bis 6 Kohlenstoffatomen, wie Acetylamino, Hydroxy und Carboxy. Der Arylrest $W_3$ kann auch durch Sulfo substituiert sein. Insbesondere ist $W_3$, $W_5$ und $W_6$ als Arylrest ein Phenylrest, der durch Methyl, Trifluormethyl und Chlor substituiert sein kann.

Bedeutet $W_4$ einen Alkylrest, so kommt vorzugsweise ein geradkettiger oder verzweigter $C_{1-12}$-Alkyl- und insbesondere $C_{1-8}$-Alkylrest in Betracht. Als Beispiel seien genannt: Methyl, Aethyl, Propyl, Isopropyl, Butyl, sek.-Butyl, tert.-Butyl, Isobutyl, Pentyl-(1), Pentyl-(3), Heptyl-(1), Heptyl-(3) und Octyl-(1).

Bedeuten $W_5$ und $W_6$ einen gegebenenfalls substituierten Cycloalkylrest, so kommen unabhängig voneinander vorzugsweise Cycloalkylgruppen mit 5- bis 7-gliedrigen Ringen in Betracht, die weitersubstituiert sein können, z.B. durch $C_{1-4}$-Alkyl, wie Methyl. Insbesondere kommt die Cyclohexylgruppe in Betracht.

Besonders bevorzugte Ausführungsformen des erfindungsgemässen Verfahrens sind dadurch gekennzeichnet, dass man

a) mindestens einen roten Farbstoff der Formel (3), worin A Wasserstoff, Methyl, Trifluormethyl,

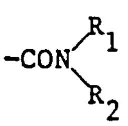 , 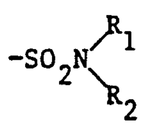 oder $-SO_2R_3$

ist, wobei $R_1$ Methyl oder Aethyl, $R_2$ Cyclohexyl oder Phenyl und $R_3$ Phenyl, Methylphenyl, Phenoxy oder Chlorphenoxy ist und B Wasserstoff, Chlor, Acetylamino, Propionylamino, Cyclohexyloxycarbonylamino, Phenylsulfonylamino oder Methylphenylsulfonylamino ist, verwendet, wobei A und B zusammen nicht beide Wasserstoff bedeuten; und

(b) mindestens einen gelben oder orangen Farbstoff der Formel

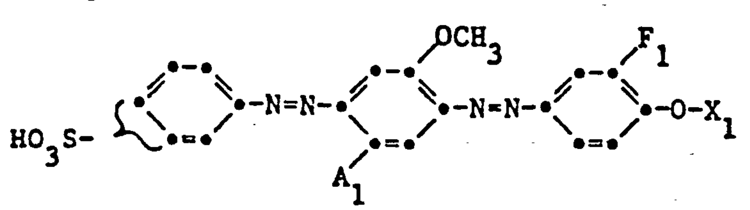 (7) ,

worin $A_1$ Wasserstoff oder Methyl, $F_1$ Wasserstoff oder Methyl und $X_1$ Methyl, Aethyl, β-Hydroxyäthyl, β-Hydroxypropyl, β-Hydroxbutyl oder α-Aethyl-β-hydroxyäthyl ist, oder eine Mischung aus mindestens einem Farbstoff der Formel (7) und einem gelben Farbstoff der Formel

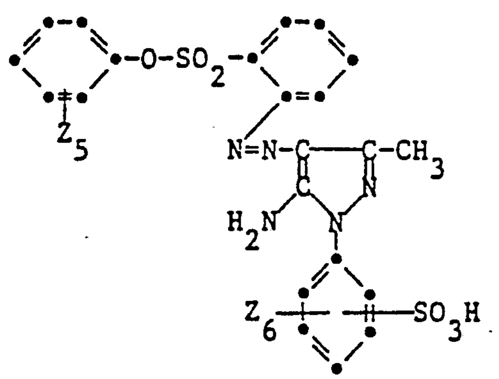

(8) ,

worin $Z_5$ und $Z_6$ unabhängig voneinander Wasserstoff, Methyl oder Chlor bedeuten oder einen gelben Farbstoff der Formel

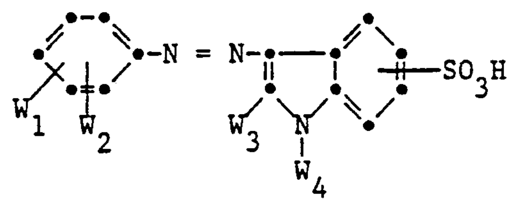

(9) ,

worin $W_1$ Wasserstoff, Methyl, Chlor, Methoxy, Aethoxy, o-Methylphenoxy, Phenoxy, Acetylamino, Phenysulfonyl, p-Methylphenylsulfonyl, p-Chlorphenylsulfonyl, Naphthylsulfonyl, p-Methylbenzoyl oder p-Chlorbenzoyl, $W_2$ Wasserstoff, Chlor, Methyl, Trifluormethyl, o-Methylphenoxy, o-Chlorphenoxy, o-Chlorphenoxysulfonyl, $—SO_2NH_2$, N—$C_{1-2}$-Alkylaminosulfonyl, N,N-Dimethylaminosulfonyl, N-Methyl-N-β-hydroxyäthylaminosulfonyl, N-Methyl-N-cyclohexylaminosulfonyl, N-Phenylaminosulfonyl, N-o-Methylphenylaminosulfonyl, N-o-Chlorphenylaminosulfonyl, N-m-Trifluormethylphenylaminosulfonyl, N-Aethyl-N-phenylaminosulfonyl, $—CONH_2$ oder $—CON(CH_3)_2$, $W_3$ Methyl oder Phenyl und $W_4$ Wasserstoff, Methyl, Aethyl oder Octyl ist, verwendet.

Besonders interessante Ausführungsformen des erfindungsgemässen Verfahrens sind dadurch gekennzeichnet, dass man

c) insbesondere einen Farbstoff der Formel (1) verwendet, worin $G_1$, $G_2$, $G_4$ und $G_5$ Wasserstoff und $G_3$ Chloracetylamino oder α,β-Dibrompropionylamino ist, oder worin $G_1$, $G_2$, $G_3$ und $G_5$ Wasserstoff und $G_4$ Vinylsulfonyl, Chloracetylamino, 2-Methoxy- oder 2-Aethylamino-4-fluor-s-triazinylamino ist, oder worin $G_1$, $G_3$ und $G_5$ Methyl, $G_2$ Wasserstoff und $G_4$ Chloracetylaminomethyl, α,β-Dibrompropionylaminomethyl oder $—CH(COOH)—NH—CO—CHBr—CH_2Br$ ist, oder worin $G_1$ Methoxy, $G_2$, $G_3$ und $G_5$ Wasserstoff und $G_4$ β-Sulfatoäthylsulfonyl ist, oder worin $G_1$, $G_3$ und $G_5$ Methyl und $G_2$ und $G_4$ Chloracetylaminomethyl oder $—CH(COOH)—NH—CO—CHBr—CH_2Br$ ist, oder worin $G_1$, $G_3$ und $G_5$ Methyl, $G_2$ α,β-Dibrompropionylamino und $G_4$ Sulfo ist, oder worin $G_1$ Sulfo, $G_2$, $G_4$ und $G_5$ Wasserstoff und $G_3$ α-Bromacryloylamino ist, oder worin $G_1$ Methyl, $G_2$ 2,6-Difluor-5-chlorpyrimidinylamino, $G_3$ und $G_5$ Wasserstoff und $G_4$ Sulfo ist; oder

d) einen blauen Farbstoff der Formel (2) verwendet, worin $Y_1$ Cyclohexyl und $Y_3$ 4-(4'-Methylphenoxy)-phenyl ist, wobei der Phenylring der Phenoxygruppe durch Sulfo und Chloracetylaminomethyl substituiert ist.

Eine besonders wichtige Ausführungsform des erfindungsgemässen Verfahrens ist dadurch gekennzeichnet, dass man einen blauen Farbstoff der Formel (1), worin $G_1$, $G_2$, $G_4$ und $G_5$ Wasserstoff und $G_3$ α,β-Dibrompropionylamino ist, oder worin $G_1$, $G_3$, $G_4$ und $G_5$ Wasserstoff und $G_2$ Vinylsulfonyl, Chloracetylamino, 2-Methoxy-4-fluor-s-triazinylamino oder 2-Aethylamino-4-fluor-s-triazinylamino ist, oder worin $G_1$ Methyl, $G_2$ 2,6-Difluoro-5-chlorpyrimidinylamino, $G_3$ und $G_5$ Wasserstoff und $G_4$ Sulfo ist, oder worin $G_1$ Methoxy, $G_2$, $G_3$ und $G_5$ Wasserstoff und $G_4$ β-Sulfatoäthylsulfonyl ist, oder worin $G_1$, $G_3$ und $G_5$ Methyl, $G_2$ Wasserstoff oder $—CH(COOH)—NH—CO—CHBr—CH_2Br$ und $G_4$ α,β-Dibrompropionylamino-methyl oder $—CH(COOH)—NH—CO—CHBr—CH_2Br$ ist, oder worin $G_1$, $G_3$ und $G_5$ Methyl, $G_2$ α,β-Dibrompropionylamino und $G_4$ Sulfo ist, oder worin $G_1$ Sulfo, $G_2$, $G_4$ und $G_5$ Wasserstoff und $G_3$ α-Bromacryloylamino ist, zusammen mit einem roten Farbstoff der Formel (3) und den gelben bzw. orangen Farbstoffen der Formeln (4) und/oder (5) oder (6) verwendet.

Ganz besonders wichtige Ausführungsformen des erfindungsgemässen Verfahrens sind dadurch gekennzeichnet, dass man den blauen Farbstoff der Formel

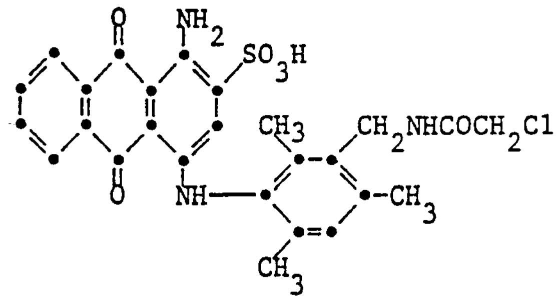

(10),

oder den Farbstoff der Formel

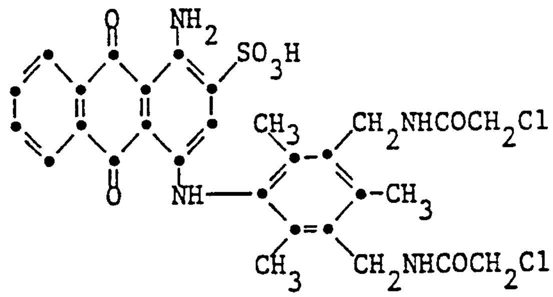

(11),

oder den Farbstoff der Formel

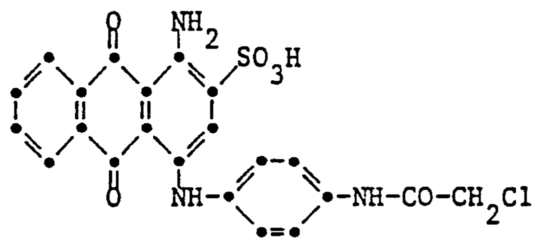

(12),

oder den Farbstoff der Formel

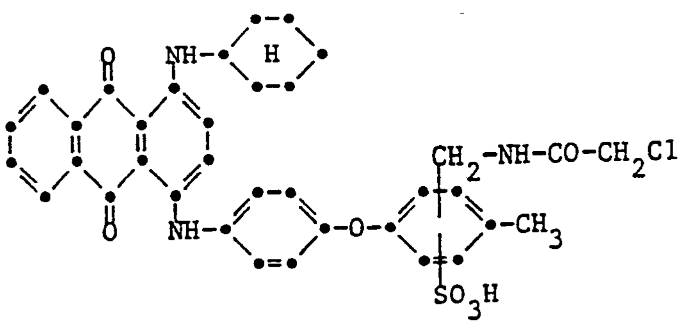

(13)

verwendet.

In dem erfindungsgemässen Verfahren können auch Mischungen von zwei oder mehr definitionsgemässen Anthrachinonfarbstoffen verwendet werden. Insbesondere verwendet man eine Mischung aus zwei Anthrachinonfarbstoffen, deren Einzelkomponenten je ein oder zwei faserreaktive Gruppen und ein oder zwei Sulfonsäuregruppen enthalten.

Vorzugsweise entspricht jede Einzelkomponente der Mischung einem der unter Formel (2) weiter oben angegebenen Anthrachinonfarbstoffe.

Eine wichtige Mischung von Anthrachinonfarbstoffen, die in dem erfindungsgemässen Verfahren verwendet werden kann, ist dadurch gekennzeichnet, dass eine Komponente einem Farbstoff der Formel (10), (11) oder einem Farbstoff der Formel

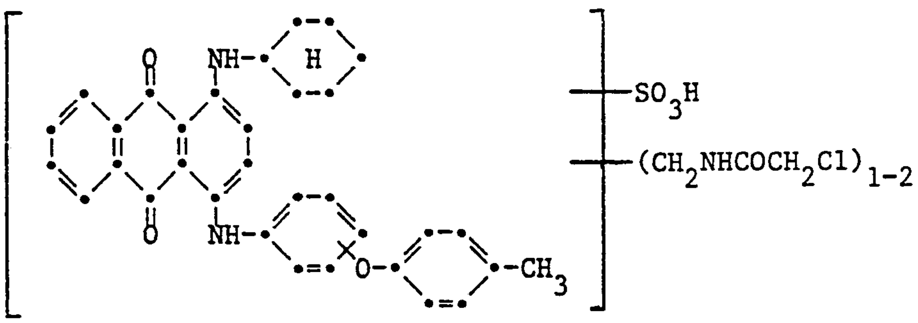
(14)

und die andere Komponente einen Farbstoff der Formel (1) entspricht, worin $G_1$, $G_2$, $G_4$ und $G_5$ Wasserstoff, und $G_3$ α,β-Dibrompropionylamino ist, oder worin $G_1$, $G_3$, $G_4$ und $G_5$ Wasserstoff und $G_2$ Vinylsulfonyl, Chloracetylamino, 2-Methoxy-4-fluor-s-triazinylamino oder 2-Aethylamino-4-fluor-s-triazinylamino ist, oder worin $G_1$ Methyl, $G_2$ 2,6-Difluor-5-chlorpyrmidinylamino, $G_3$ und $G_5$ Wasserstoff und $G_4$ Sulfo ist, oder worin $G_1$ Sulfo, $G_2$, $G_4$ und $G_5$ Wasserstoff und $G_3$ α-Bromacryloylamino ist, oder worin $G_1$, $G_3$ und $G_5$ Methyl, $G_2$ α,β-Dibrompropionylaminomethyl, —CH(COOH)—NH—CO—CHBr—$CH_2$Br oder α,β-Dibrompropionylamino und $G_4$ Wasserstoff, —CH(COOH)—NH—CO—CHBr—$CH_2$Br oder Sulfo ist, oder worin $G_1$ Methoxy, $G_2$, $G_3$ und $G_5$ Wasserstoff und $G_4$ β-Sulfatoäthylsulfonyl ist.

Eine besonders wichtige Mischung von Anthrachinonfarbstoffen, die in dem erfindungsgemässen Verfahren verwendet werden kann, ist dadurch gekennzeichnet, dass eine Komponente dem Farbstoff der Formel (10) oder (11) entspricht und die andere Komponente dem Farbstoff der Formel (14) entspricht.

Eine weitere besonders wichtige Mischung von Anthrachinonfarbstoffen, die in dem erfindungsgemässen Verfahren verwendet werden kann, ist dadurch gekennzeichnet, dass eine Komponente dem Farbstoff der Formel (10) oder (11) entspricht, und die andere Komponente dem Farbstoff der Formel (1) entspricht, worin $G_1$, $G_2$, $G_4$ und $G_5$ Wasserstoff und $G_3$ Chloracetylamino ist.

Eine ganz besonders wichtige Mischung von Anthrachinonfarbstoffen die in dem erfindungsgemässen Verfahren verwendet werden kann, ist dadurch gekennzeichnet, dass eine Komponente dem Farbstoff der Formel (11) entspricht und die andere Komponente dem Farbstoff der Formel (13) entspricht. Vorzugsweise ist das Gewichtsverhältnis der Farbstoffe der Formeln (11) zu (13) 90:10 bis 70:30, insbesondere 80:20.

Im allgemeinen kann das Gewichtverhältnis der Anthrachinonfarbstoffe in dem erfindungsgemäss verwendet Mischungen in weiten Grenzen schwanken. Ein Gewichtsverhältnis von 90:10 bis 10:90 und insbesondere von 70:30 bis 30:70 hat sich als vorteilhaft erwiesen.

Die in dem erfindungsgemässen Verfahren verwendeten Anthrachinonfarbstoffe der Formel (2) oder die Komponenten der Mischungen der Anthrachinonfarbstoffe enthalten vorzugsweise nur eine einzige Sulfonsäuregruppe.

In dem erfindungsgemässen Verfahren verwendet man vorzugsweise als roten Farbstoff

e) einen roten Farbstoff der Formel (3), worin A Wasserstoff, N-Methyl-N-cyclohexylsulfamoyl, Phenylsulfonyl, N-Aethyl-N-phenylsulfamoyl, Phenoxysulfonyl oder Trifluormethyl und B Wasserstoff, Acetylamino oder Cyclohexyloxycarbonylamino ist, und insbesondere

f) einen roten Farbstoff der Formel (3), worin A Wasserstoff und B Acetylamino oder Cyclohexyloxycarbonylamino oder A Trifluormethyl und B Acetylamino oder A Phenylsulfonyl, N-Methyl-N-cyclohexylsulfamoyl, N-Aethyl-N-phenylsulfamoyl oder Phenoxysulfonyl und B Wasserstoff ist; und als gelben oder orangen Farbstoff der Formel (4) bis (6)

g) des gelben Farbstoff der Formel

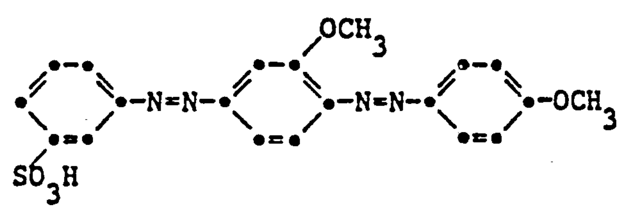
(15) ,

oder den orangen Farbstoff der Formel

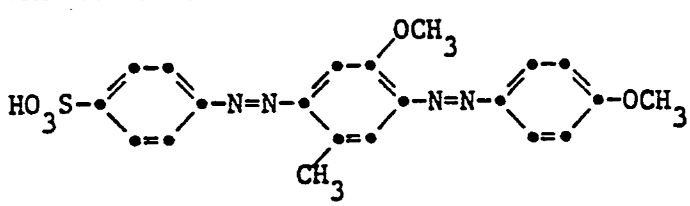
(16)

oder eine Mischung des gelben Farbstoffs der Formel (15) mit dem orangen Farbstoff der Formel (16), oder eine Mischung der Farbstoffe der Formeln (15) und/oder (16) mit dem Farbstoff der Formel

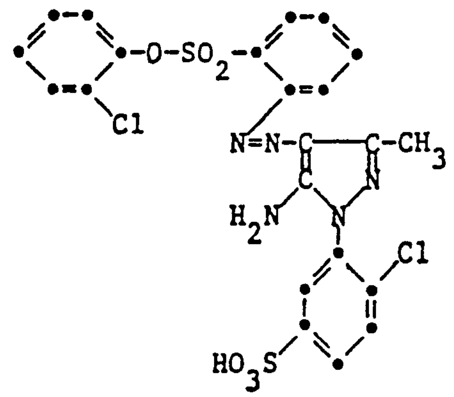

(17) ,

wobei das Gewichtverhältnis der Farbstoffe der Formeln (15) und (16) 60:40 bis 40:60 und insbesondere 1:1 und das Gewichtsverhältnis der Farbstoffe der Formeln (15) oder (16) und (17) 80:20 bis 20:80 und insbesondere 70:30 ist, und das Gewichtverhältnis der Farbstoffe der Formeln (15), (16) und (17) 60:20:20, 20:60:20 bis 20:20:60 und insbesondere 1:1:1 ist, oder den gelben Farbstoff der Formel

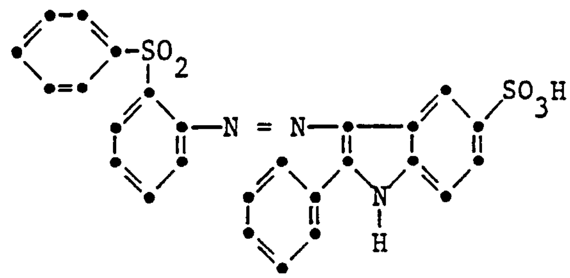

(18).

Eine ganz besonders bevorzugte Ausführungsform des erfindungsgemässen Verfahrens ist dadurch gekennzeichnet, dass man einen blauen Farbstoff der Formeln (10), (11), (12) oder (13) oder eine Mischung der Farbstoffe der Formeln (11) und (13) im Gewichtsverhältnis von insbesondere 70:30 zusammen mit einem roten Farbstoff der Formeln

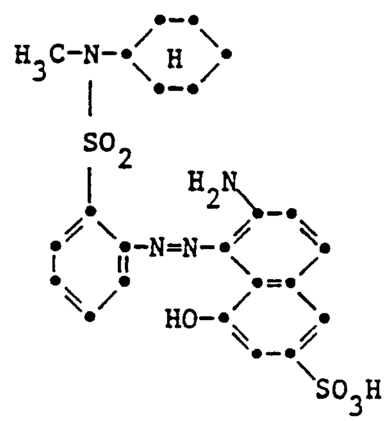

(19) ,

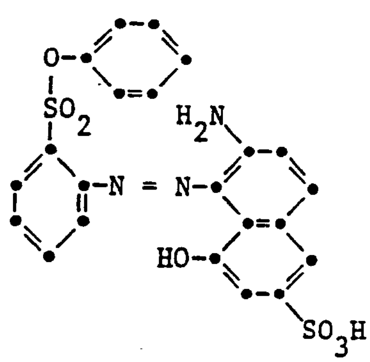

(20) oder

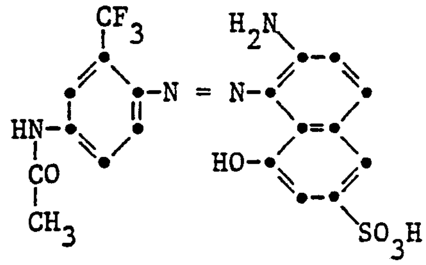

(21) und

dem gelben Farbstoff der Formel (15), (16) oder (18) oder der Mischung der gelben Farbstoffe der Formeln (15) und (17) im Gewichtsverhältnis 70:30 verwendet.

Eine ganz besonders wichtige Ausführungsform des erfindungsgemässen Verfahrens ist dadurch gekennzeichnet, dass man einen Farbstoff der Formel (10) oder (11) zusammen mit dem Farbstoff der Formel (19) und dem Farbstoff der Formel (16) verwendet.

Die in dem erfindungsgemässen Verfahren zum Trichromie-Färben verwendeten Farbstoffe sind bekannt oder können in Analogie zu bekannten Verfahren hergestellt werden. So können beispielsweise die Farbstoffe der Formeln (1) und (2) gemäss den Angaben der deutschen Offenlegungsschriften 2 305 206 und 3 142 852 der schweizer Patentschrift 466.470, der britischen Patentschrift 903590, die Farbstoffe der Formel (3) gemäss den Angaben der deutschen Patentschriften 702 932 und 2 063 907 und deutschen Offenlegungschrift 27 12 170 und die Farbstoffe der Formeln (4) und (5) gemäss den Angaben der deutschen Offenlegungsschrift 21 42 412 und der deutschen Auslegeschrift 11 00 846 hergestellt werden.

Werden in dem erfindungsgemässen Verfahren Farbstoffmischungen verwendet, so können diese durch Mischung der Einzelfarbstoffe hergestellt werden. Dieser Mischprozess erfolgt beispielsweise in geeigneten Mühlen, z.B. Kugel- und Stiftmühlen, sowie in Knetern oder Mixern.

Ferner können die Farbstoffmischungen der Farbstoffe durch Zerstäubungstrocknen der wässrigen Farbstoffmischungen hergestellt werden.

Die in dem erfindungsgemässen Verfahren verwendeten Farbstoffe liegen entweder in der Form ihrer Sulfonsäure oder vorzugsweise als deren Salze vor.

Als Salze kommen beispielsweise die Alkali-, Erdalkali- oder Ammoniumsalze oder die Salze eines organischen Amins in Betracht. Als Beispiele seien die Natrium-, Lithium-, Kalium- oder Ammoniumsalz oder das Salz des Triäthanolamins genannt.

Die in dem erfindungsgemässen Verfahren verwendeten Farbstoffe enthalten in der Regel weitere Zusätze wie z.B. Kochsalz oder Dextrin.

Das erfindungsgemässe Verfahren zum Trichromie-Färben kann auf die üblichen kontinuierlichen Färbeverfahren angewendet werden. Die Färbeflotten können ausser Wasser und den Farbstoffen weitere Zusätze, beispielsweise Netzmittel, Antischaummittel, Egalisiermittel oder die Eigenschaft des Textilmaterials, beeinflussende Mittel wie z.B. Weichmachungsmittel, Zusätze zum Flammfestausrüsten oder schmutz-, wasser- und öl-abweisende Mittel sowie wasserenthärtende Mittel und natürliche oder synthetische Verdicker, wie z.B. Alginate und Celluloseäther, enthalten.

Das erfindungsgemässe Verfahren ist besonders zum Färben aus Kurzflotten, wie z.B. bei Kontinuefärbeverfahren oder/und kontinuierlichen Schaumfärbeverfahren, geeignet.

Das erfindungsgemässe Verfahren eignet sich zum kontinuierlichen Färben von synthetischen Polyamidmaterialien wie z.B. Nylon oder Perlon insbesondere Polyamid 6.6- und vorzugsweise Polyamid 6-Materialien.

Das genannte Polyamid-Textilmaterial kann dabei in den verschiedensten Verarbeitungsformen vorliegen, wie z.B. als Faser, Garn, Gewebe oder Gewirke oder insbesondere in Form von Teppichen.

Die besonders hervorzuhebende gute Ozonechtheit der nach dem erfindungsgemässen Verfahren erhaltenen Färbungen wird gemäss den Vorschriften der American Association of Textile Chemists and Colorists Test Methode 109—1975 bzw. 129—1975 bestimmt.

Die Mengen, in denen die Farbstoffe oder Mischungen in den Färbebädern verwendet werden, können je nach der gewünschten Farbtiefe in weiten Grenzen schwanken, im allgemeinen haben sich Mengen von 0,001 bis 6 Gewichtsprozent, bezogen auf das Färbegut, als vorteilhaft erwiesen.

Das Flottenverhältnis kann innerhalb eines weiten Bereichs gewählt werden, insbesondere von 1:1 bis 1:5 für kontinuierliche Färbeverfahren.

Das Färben erfolgt aus wässriger Flotte bei Temperaturen zwischen 60 und 98°C. Vorzugsweise wird heiss foulardiert oder heiss auf die Ware aufgesprüht.

Der pH-Wert der Färbeflotte kann im Bereich von 5 bis 9 schwanken. Im allgemeinen hat sich ein pH von 6 bis 8,5 als vorteilhaft erweisen.

In den folgenden Beispielen stehen Teile für Gewichsteile. Die Temperaturen sind Celsiusgrade. Die Beziehung zwischen Gewichtsteilen und Volumenteilen ist dieselbe wie diejenige zwischen Gramm und Kubikzentimeter.

Beispiel 1

Eine wässrige Lösung enthaltend 0,65 g/l Farbstoffes der Formel

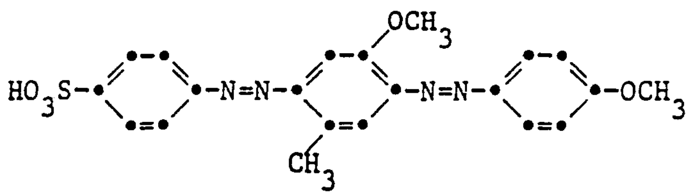

(16),

0,29 g/l des Farbstoffs der Formel

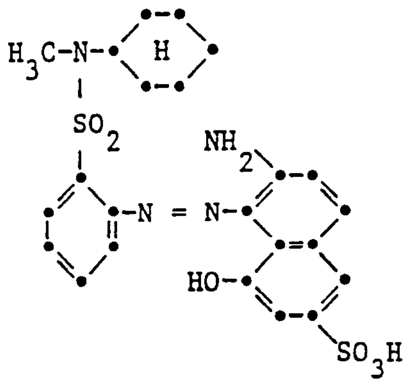

(19)

und 0,57 g/l des Farbstoffes der Formel

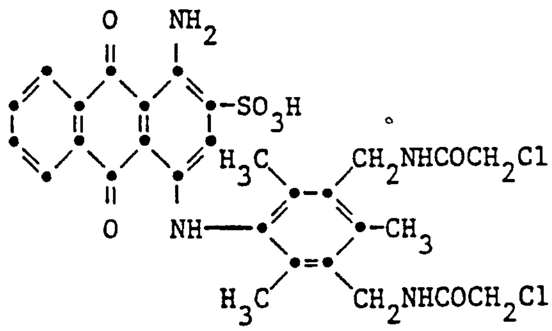

(11)

sowie 3 g/l eines anionischen Netzmittels wird mit $Na_3PO_4$ auf einen pH von 8,2 eingestellt.

Von dieser Flotte werden 300%, bezogen auf das Teppichgewicht, auf einen nicht vorgenetzten Polyamid-6-Rohteppich bei einer Temperatur der Flotte von 22° und einer Teppichgeschwindigkeit von 8 Meter pro Minute aufgetragen. Der getränkte Teppich gelangt dann in einen Dämpfer, wo er während 4 Minuten mit Sattdampf von 98 bis 100° behandelt wird.

Nach dem Waschen in einer Breitwaschmaschine erhält man einen in gleichmässiger brauner Nuance bezüglich der Fläche als auch der Einzelfaser gefärbten Teppich mit guter Ozonechtheit.

Die Ozonechtheit der erhaltenen Färbungen wird nach der Prüfvorschrift AATCC [American Association of Textile Chemists and Colorists] 129—1975 durchgeführt und die Farbänderung mit dem Graumassstab (SNV Schweizerische Normenvereinigung — Norm 95805) bewertet, wobei die Note 1 die schlechteste und die Note 5 die beste Bewertung ist.

Die mit obigen Farbstoffen erhaltene Färbung hat die Echtheitsnote 4.

Verwendet man anstelle der kalten Flotte des obigen Beispiels eine auf 90° erhitzte Flotte so erhält man ohne Verwendung eines Dämpfers oder mit einer Verweilzeit von 1 Minute im Sattdampf von 98 bis 100° einen ebenfalls gleichmässig braun gefärbten Teppich von guter Ozonechtheit mit der Echtheitsnote 4.

Beispiel 2

Eine wässrige Lösung enthaltend 0,15 g/l des Farbstoffes der Formel

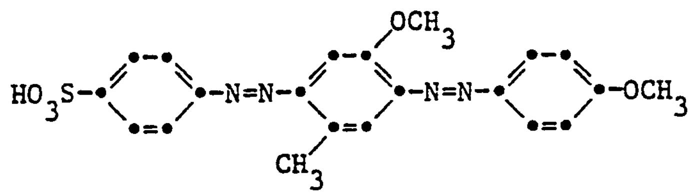

(16) ,

0,1 g/l des Farbstoffes der Formel

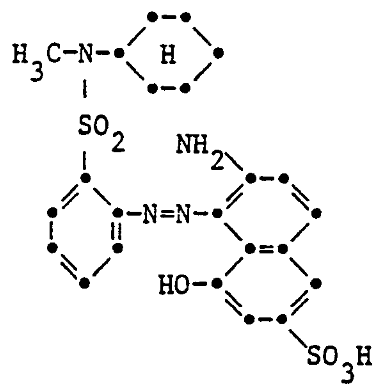

(19) ,

0,125 g/l des Farbstoffes der Formel

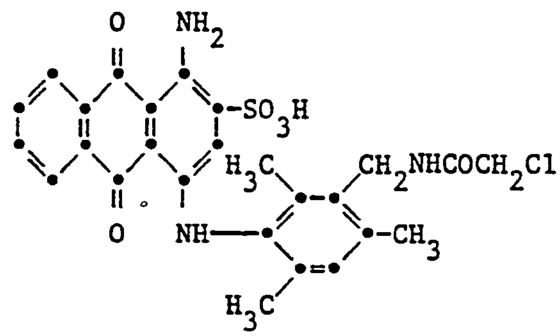

(10) ,

2,0 g/l des Ammoniumsulfatesters von äthoxyliertem Nonylphenol und 0,5 g/l äthoxyliertes Nonylphenol, die mit einer Mischung aus $Na_2HPO_4$ und $NaH_2PO_4$ auf einen pH von 8.0 eingestellt ist, wird auf 96 bis 98° erhitzt. Die heisse Lösung wird in einer geschlossenen Kammer mit einem Druck von 3 atm durch eine Reihe von Düsen auf einen Polyamid-66-Teppich gesprüht, welcher kontinuierlich durch die Kammer geführt wird. Die Verweilzeit des Teppichs in der Kammer beträgt ca. 5 Sekunden. Die Flottenaufnahme beträgt ca. 500% bezogen auf das Teppichgewicht. Man erhält einen gleichmässig braun gefärbten Polyamid-66-Teppich mit einer Ozonechtheit von 3—4, wobei die Bewertung der Ozonechtheit wie in Beispiel 1 angegeben erfolgt.

Wenn man wie in Beispiel 1 angegeben verfährt und anstelle der in Beispiel 1 genannten Kombination der Farbstoffe der Formeln (16), (19) und (11) die in der folgenden Tabelle in den Beispielen 3 bis 12 in Spalte II angegebene Kombination von Farbstoffen in den dort angegebenen Mengen verwendet, so erhält man ebenfalls in gleichmässig olive bis brauner Nuance gefärbte Teppiche mit guter Ozonechtheit, wobei die Berwertung der Ozonechtheit wie in Beispiel 1 erfolgt und die Echtheitsnote in Spalte III angegeben ist.

Tabelle

| Beispiel | Farbstoffe | Echtheitsnote |
|---|---|---|
| 3 | 0,84 g/l des Farbstoffes der Formel<br>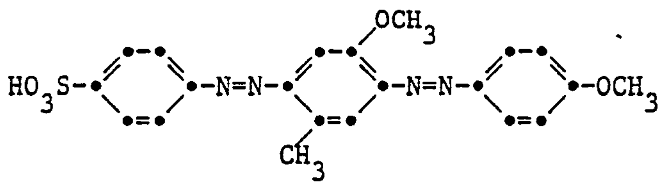 (16)<br>1,78 g/l des Farbstoffes der Formel<br>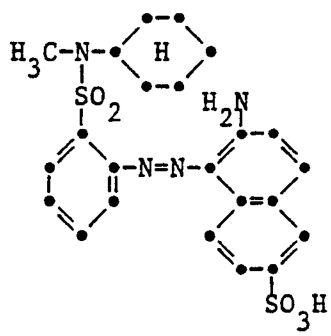 (19)<br>und<br>0,98 g/l des Farbstoffes der Formel<br>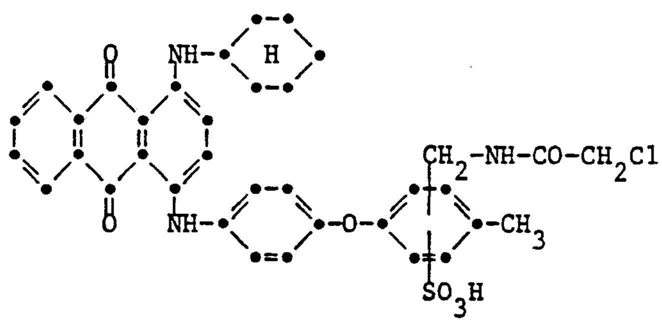 (13) | 3-4 |
| 4 | 0,92 g/l des Farbstoffes der Formel (16)<br>1,67 g/l des Farbstoffes der Formel (19) und<br>0,76 g/l des Farbstoffes der Formel<br>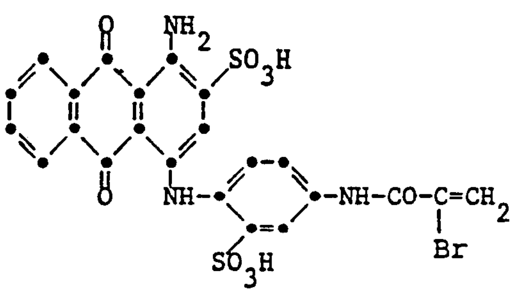 (22) | 4 |

| Beispiel | Farbstoffe | Echtheitsnote |
|---|---|---|
| 5 | 0,90 g/l des Farbstoffes der Formel (16),<br>1,30 g/l des Farbstoffes der Formel (19) und<br>1,02 g/l des Farbstoffes der Formel<br>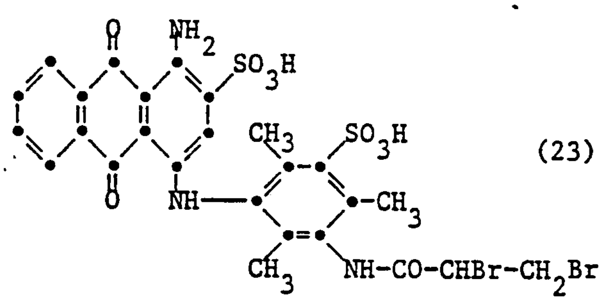 (23) | 4 |
| 6 | 0,92 g/l des Farbstoffes der Formel (16),<br>1,33 g/l des Farbstoffes der Formel (19) und<br>1,89 g/l des Farbstoffes der Formel<br>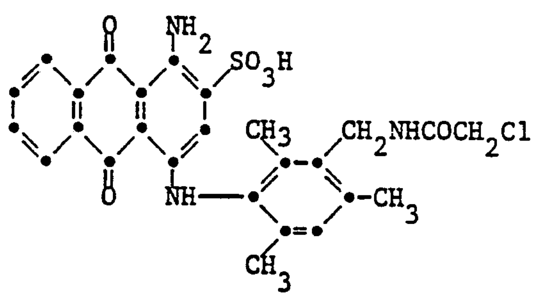 (10) | 3-4 |
| 7 | 0,86 g/l des Farbstoffes der Formel (16),<br>1,67 g/l des Farbstoffes der Formel (19) und<br>1,60 g/l des Farbstoffes der Formel<br>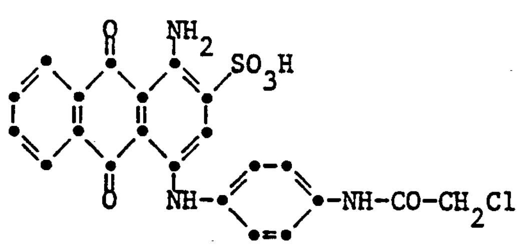 (12) | 3-4 |

| Beispiel | Farbstoffe | Echtheitsnote |
|---|---|---|
| 8 | 1,18 g/l des Farbstoffes der Formel (16),<br>1,99 g/l des Farbstoffes der Formel (19) und<br>1,14 g/l der Mischung der Farbstoffe der Formeln (10) und (13), welche zu 80 Gewichtsprozent den Farbstoff der Formel (10) und zu 20 Gewichtsprozent den Farbstoff der Formel (13) enthält, bezogen auf 100% der Mischung | 4 |
| 9 | 1,97 g/l des Farbstoffes der Formel<br>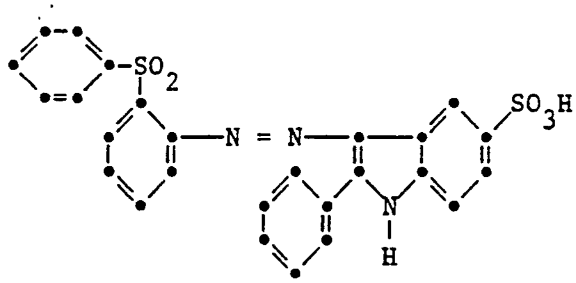 (18)<br>2,47 g/l des Farbstoffes der Formel (19) und<br>1,08 g/l der Mischung der Farbstoffe der Formeln (10) und (13), welche zu 80 Gew.% den Farbstoff der Formel (10) und zu 20 Gew.% den Farbstoff der Formel (13) enthält, bezogen auf 100 Gew.% der Mischung | 4 |
| 10 | 1,89 g/l des Farbstoffes der Formel<br>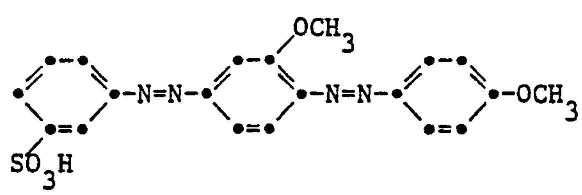 (15),<br>1,06 g/l des Farbstoffes der Formel<br>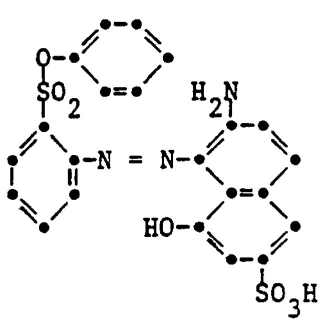 (20) | 4 |

| Beispiel | Farbstoffe | Echtheitsnote |
|---|---|---|
| | und<br>1,06 g/l des Farbstoffes der Formel (10) | |
| 11 | 2,03 g/l der Mischung der Farbstoffe der Formeln (15) und<br>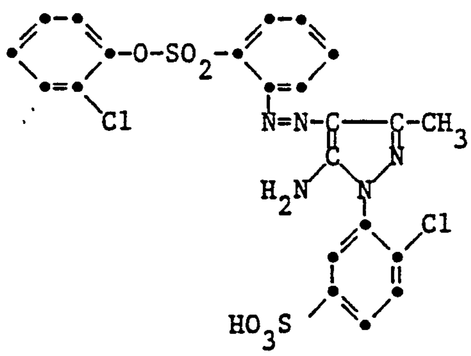 (17),<br>wobei bezogen auf 100 Gew.% die Mischung zu 70 Gew.% den Farbstoff der Formel (15) und zu 30 Gew.% den Farbstoff der Formel (17) enthält,<br>0,89 g/l des Farbstoffes der Formel<br>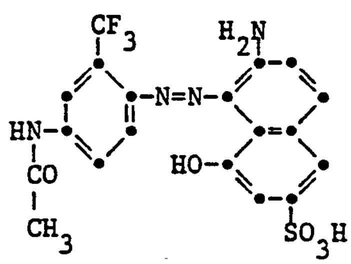 (21) und<br>1,30 g/l der Mischung der Farbstoffe der Formeln (11) und (13), wobei bezogen auf 100 Gew.% die Mischung den Farbstoff der Formel (11) zu 80 Gew.% und den Farbstoff der Formel (13) zu 20 Gew.% enthält | 4 |

| Beispiel | Farbstoffe | Echtheitsnote |
|---|---|---|
| 12 | 1,82 g/l des Farbstoffes der Formel (16),<br>2,32 g/l des Farbstoffes der Formel (19.) und<br>1,19 g/l des Farbstoffes der Formel<br>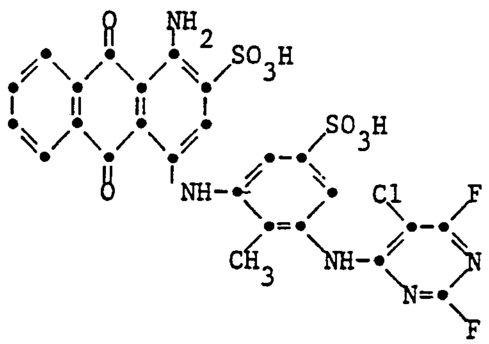 (24) | 4 |

Vergleichsbeispiel 1

Ersetzt man in Beispiel 1 die 0,57 g/l des Farbstoffes der Formel (11) durch 1,26 g/l des nicht faserreaktiven Farbstoffes der Formel

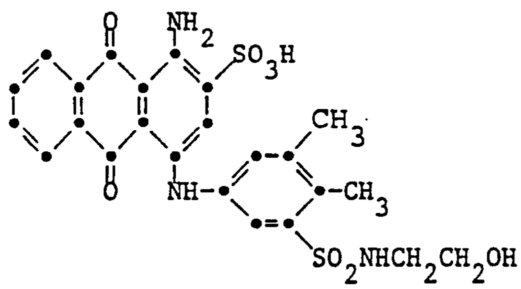

(25)

bei sonst identischer Verfahrensweise, so erhält man einen Teppich von brauner Nuance, der gemäss der Prüfvorschrift für die Ozonechtheit [AATCC 129—1975] eine Echtheitsnote für das Aendern der Farbe [SNV-Norm 95805] von nur 2 aufweist.

Vergleichsbeispiel 2

Ersetzt man in Beispiel 1 die 0,57 g/l des Farbstoffes der Formel (11) durch 1,09 g/l des nicht faserreaktiven Farbstoffes der Formel

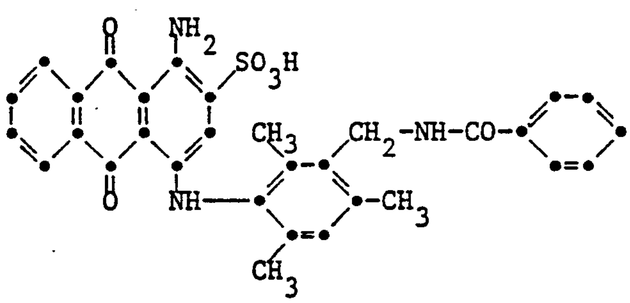

(26) ,

so erhält man einen in brauner Nuance gefärbten Teppich, der gemäss der im Vergleichbeispiel 1 angegebenen Prüfvorschrift eine Echtheitsnote von 2 für die Ozonechtheit aufweist.

**Patentansprüche**

1. Verfahren zum kontinuierlichen Trichromie-Färben von synthetischen Polyamidmaterialien, dadurch gekennzeichnet, dass man diese Materialien mit einer Färbeflotte kontinuierlich behandelt, welche mindestens einen faserreaktiven blauen Farbstoff der Formel

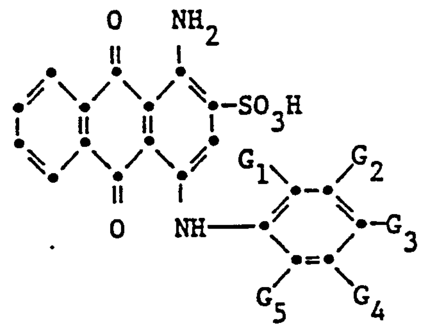

(1) ,

worin $G_1$, $G_3$ und $G_5$ Methyl, $G_4$, α,β-Dibrompropionylaminomethyl, α-Chlor- oder α-Bromacryloylaminomethyl, β-(β'-Sulfatoäthylsulfonyl)-propionylaminomethyl, α,β-Dibrompropionylamino, —CH(COOH)—NH—CO—CHBr—$CH_2Br$ oder Chloracetylaminomethyl und $G_2$ Wasserstoff, Sulfo oder Chloracetylaminomethyl oder —CH(COOH)—NH—CO—CHBr—$CH_2Br$ ist, oder worin $G_1$ Wasserstoff oder Methoxy, $G_2$, $G_3$ und $G_5$ Wasserstoff und $G_4$ Sulfatoäthylsulfonyl, Chloracetylamino, α,β-Dibrompropionylamino, Vinylsulfonyl, 2-Methoxy-4-fluor-s-triazinylamino oder 2-Aethylamino-4-fluor-s-triazinylamino ist, oder worin $G_1$, $G_2$, $G_4$ und $G_5$ Wasserstoff und $G_3$ Chloracetylamino oder α,β-Dibrompropionylamino, 2,6-Difluor-5-chlorpyrimidin-4-ylamino, 2-Chlor-4-amino- oder 4-N,N-Dimethylamino-s-triazinylamino ist, oder worin $G_1$ Methyl, $G_2$ β-Sulfatoäthylsulfonyl und $G_3$, $G_4$ und $G_5$ Wasserstoff ist, oder worin $G_1$ oder $G_2$ Sulfo, $G_3$ α-Bromacryloylamino oder N-Methyl-N-[3-(β-chloräthylsulfonylbenzoyl)-amino und $G_2$ oder $G_1$ und $G_4$ und $G_5$ Wasserstoff ist, oder $G_1$, $G_2$ und $G_5$ Wasserstoff, $G_3$ Methyl und $G_4$ Chloracetylamino ist, oder worin $G_1$ Methyl, $G_2$ 2,6-Difluor-5-chlor-pyrimidinylamino, $G_4$ Sulfo und $G_3$ und $G_5$ Wasserstoff ist, oder mindestens einen faserreaktiven blauen Farbstoff der Formel

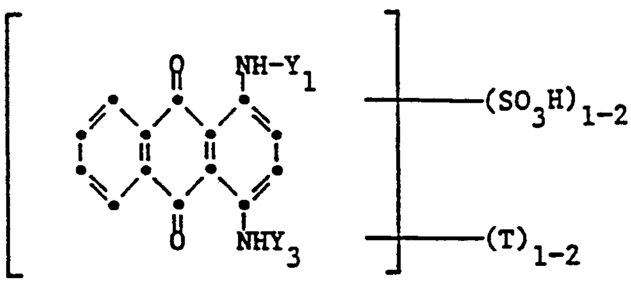

(2) ,

worin $Y_1$ Cyclohexyl, $Y_3$ 4-(4'-Methylphenoxy)-phenyl und T Chloracetylaminomethyl ist und der Farbstoff eine einzige Sulfonsäuregruppe enthält, oder worin $Y_1$ Isopropyl und $Y_3$ ein Phenyl-sek.-butylrest ist, der im Phenylring durch Sulfo und Choracetylaminomethyl substituiert ist, oder ein Diphenylätherrest ist, der im Phenoxyrest durch Sulfo und Acryloylaminomethyl substituiert ist, oder worin $Y_1$ und $Y_3$ je einen Phenyl-sek.-butylrest bedeuten, der im Phenylring durch Sulfo und Chloracetylaminomethyl substituiert ist, oder worin $Y_1$ und $Y_3$ je einen 4-α-Bromacryloylamino-3-sulfophenylrest bedeuten, zusammen mit mindestens einem roten Farbstoff der Formel

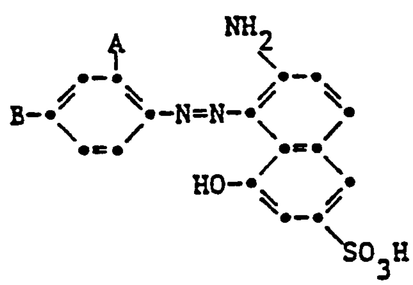

(3) ,

worin A Wasserstoff, gegebenenfalls substituiertes $C_{1-4}$-Alkyl,

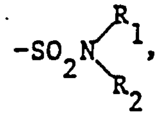, 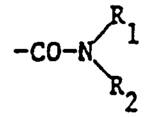 oder $-SO_2R_3$

ist, wobei $R_1$ $C_{1-4}$-Alkyl, $R_2$ gegebenenfalls substituiertes $C_{5-7}$-Cycloalkyl oder gegebenenfalls substituiertes Phenyl und $R_3$ gegebenenfalls substituiertes Phenyl oder gegebenenfalls substituiertes Phenoxy ist, und B Wasserstoff, Halogen, $C_{2-4}$-Alkanoylamino, $C_{5-8}$-Cycloalkoxycarbonylamino, $C_{1-4}$-Alkoxycarbonylamino, $C_{1-4}$-Alkylsulfonylamino oder gegebenenfalls substituiertes Phenylsulfonylamino bedeutet, und mindestens einem gelben oder orangen Farbstoff der Formeln

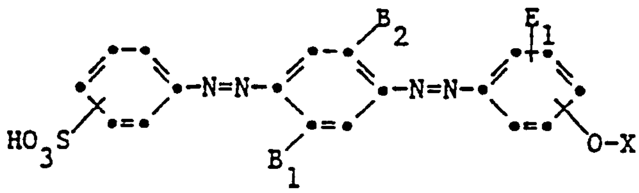 (4) ,

worin $B_1$, $B_2$ und $E_1$ Wasserstoff, $C_{1-4}$-Alkyl oder $C_{1-4}$-Alkoxy und X geradkettiges oder verzweigtes $C_{1-4}$-Alkyl oder geradkettiges oder verzweigtes $C_{2-4}$-Hydroxyalkyl bedeuten, oder

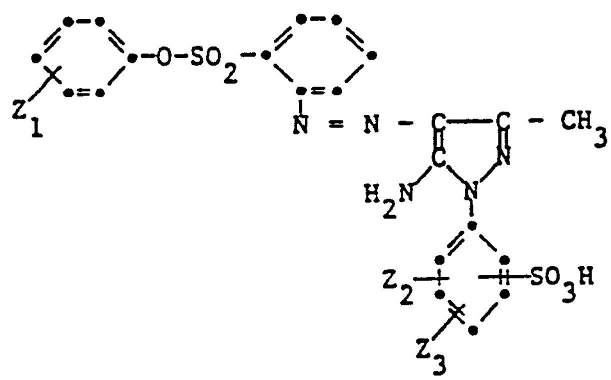 (5) ,

worin $Z_1$, $Z_2$ und $Z_3$ unabhängig voneinander Wasserstoff, Halogen, $C_{1-4}$-Alkyl oder $C_{1-4}$-Alkoxy bedeuten, oder Mischungen von Farbstoffen der Formeln (4) und (5), oder einem gelben Farbstoff der Formel

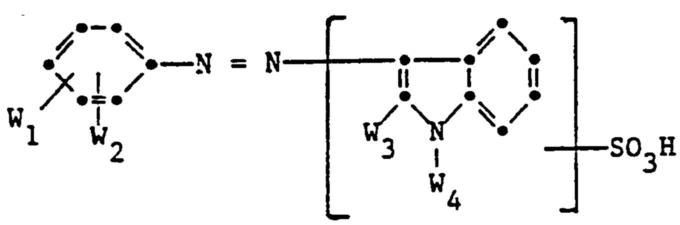 (6) ,

worin $W_1$ Wasserstoff, $C_{1-4}$-Alkyl, $C_{1-4}$-Alkoxy, Halogen, $C_{2-4}$-Alkanoyl amino oder ein gegebenenfalls substituierten Arylsulfonyl-, Aryloxy- oder Arylcarbonylrest, $W_2$ Wasserstoff, Halogen, einen gegebenenfalls substituierten Alkyl-, Aryloxy- oder Aryloxysulfonylrest oder ein Rest der Formel

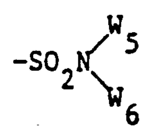 oder 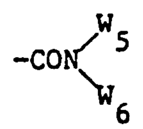 ,

ein gegebenenfalls substituierter Alkyl- oder Arylrest, $W_4$ Wasserstoff oder Alkyl und $W_5$ und $W_6$ unabhängig voneinander Wasserstoff oder ein gegebenenfalls substituierter Alkyl-, Cycloalkyl- oder Arylrest ist, sowie Wasser und gegebenenfalls weitere Zusätze enthält.

2. Verfahren gemäss Anspruch 1, dadurch gekennzeichnet, dass man die blauen Farbstoffe der Formeln

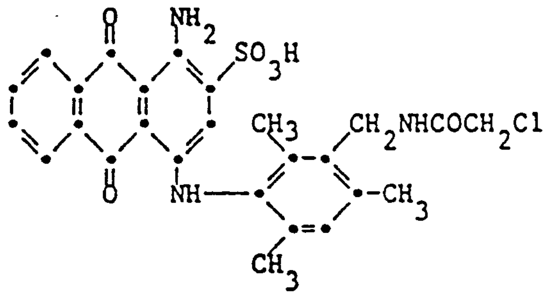

(10) ,

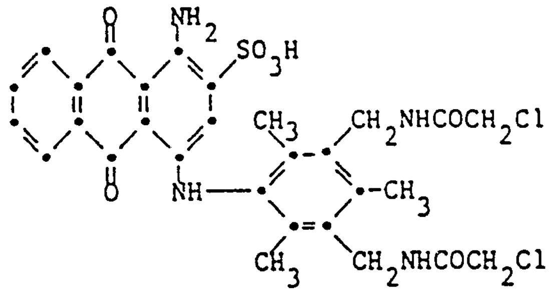

(11) ,

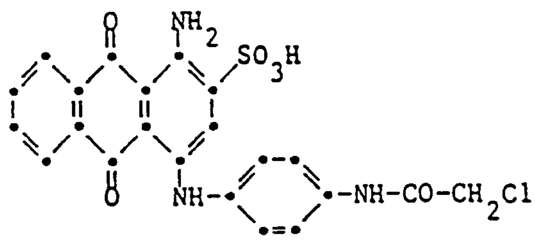

(12) ,

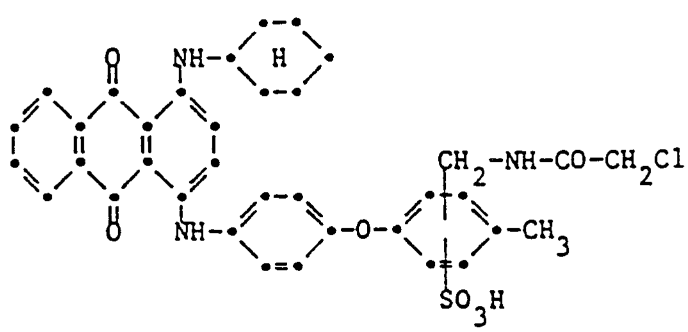

(13)

verwendet.

3. Verfahren gemäss Anspruch 1, dadurch gekennzeichnet, dass man Mischungen von zwei Anthrachinonfarbstoffen gemäss der in Anspruch 1 angegebenen Definition verwendet.

4. Verfahren gemäss Anspruch 3, dadurch gekennzeichnet, dass man eine Mischung verwendet, wobei eine Komponente einem Farbstoff der Formel (1), (10) oder (11) entspricht, und die andere Komponente dem Farbstoff der Formel

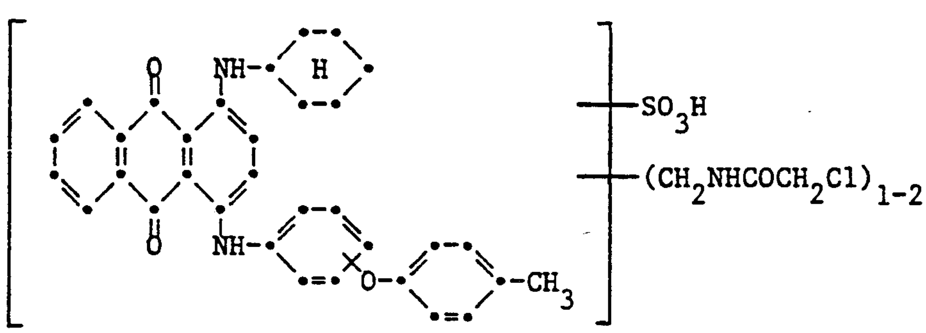

(14)

entspricht.

5. Verfahren gemäss einem der Ansprüche 1 und 3, dadurch gekennzeichnet, dass man monosulfogruppenhaltige Farbstoff der Formel (2) verwendet.

6. Verfahren gemäss Anspruch 1, dadurch gekennzeichnet, dass man mindestens einen roten Farbstoff der Formel (3), worin A Wasserstoff, Methyl, Trifluormethyl,

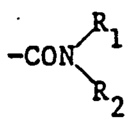 , 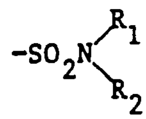 oder $-SO_2R_3$

ist, wobei $R_1$ Methyl oder Aethyl, $R_2$ Cyclohexyl oder Phenyl und $R_3$ Phenyl, Methylphenyl, Phenoxy oder Chlorphenoxy ist und B Wasserstoff, Chlor, Acetylamino, Propionylamino, Cyclohexyloxycarbonylamino, Phenylsulfonylamino oder Methylphenylsulfonylamino ist, verwendet, wobei A und B zusammen nicht beide Wasserstoff bedeuten.

7. Verfahren gemäss Anspruch 6, dadurch gekennzeichnet, dass man einen roten Farbstoff der Formel (3), worin A Wasserstoff, N-Methyl-N-cyclohexylsulfamoyl, Phenylsulfonyl, N-Aethyl-N-phenylsulfamoyl, Phenoxysulfonyl oder Trifluormethyl und B Wasserstoff, Acetylamino oder Cyclohexyloxycarbonylamino ist, verwendet.

8. Verfahren gemäss Anspruch 7, dadurch gekennzeichnet, dass man einen roten Farbstoff der Formel (3), worin A Wasserstoff und B Acetylamino oder Cyclohexyloxycarbonylamino oder A Trifluormethyl und B Acetylamino oder A Phenylsulfonyl, N-Methyl-N-cyclohexylsulfamoyl, N-Aethyl-N-phenylsulfamoyl oder Phenoxysulfonyl und B Wasserstoff ist, verwendet.

9. Verfahren gemäss Anspruch 1, dadurch gekennzeichnet, dass man mindestens einen gelben oder orangen Farbstoff oder Formel

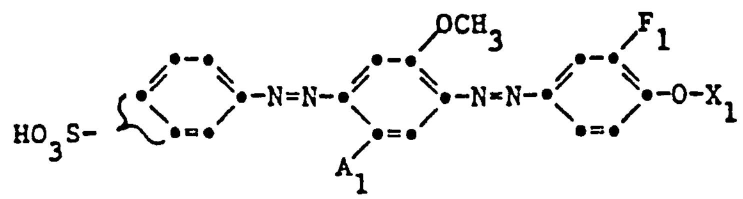

(7) ,

worin $A_1$ Wasserstoff oder Methyl, $F_1$ Wasserstoff oder Methyl und $X_1$ Methyl, Aethyl, β-Hydroxyäthyl, β-Hydroxypropyl, β-Hydroxybutyl oder α-Aethyl-β-hydroxyäthyl ist, oder eine Mischung aus mindestens einem Farbstoff der Formel (7) und einem gelben Farbstoff oder Formel

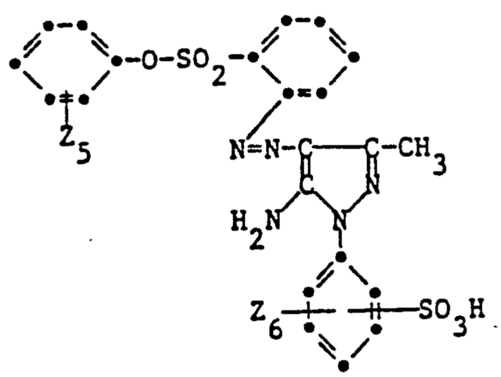

(8) ,

worin $Z_5$ und $Z_6$ unabhängig voneinander Wasserstoff, Methyl oder Chlor bedeuten, oder einen gelben Farbstoff der Formel

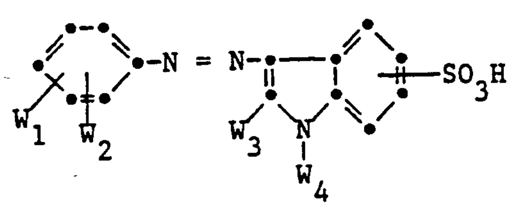

(9) ,

worin $W_1$ Wasserstoff, Methyl, Chlor, Methoxy, Aethoxy, o-Methylphenoxy, Phenoxy, Acetylamino, Phenylsulfonyl, p-Methylphenylsulfonyl, p-Chlorphenylsulfonyl, Naphthylsulfonyl, p-Methylbenzoyl oder p-Chlorbenzoyl, $W_2$ Wasserstoff, Chlor, Methyl, Trifluormethyl, o-Methylphenoxy, o-Chlorphenoxy, o-Chlorphenoxysulfonyl, $—SO_2NH_2$, N—$C_{1-2}$-Alkylaminosulfonyl, N,N-Dimethylaminosulfonyl, N-Methyl-N-β-hydroxyäthylaminosulfonyl, N-Methyl-N-cyclohexylaminosulfonyl, N-Phenylaminosulfonyl, N-o-Methylphenylaminosulfonyl, N-o-Chlorphenylaminosulfonyl, N-m-Trifluoromethylphenylaminosulfonyl, N-Aethyl-N-phenylaminosulfonyl, —$CONH_2$ oder —$CON(CH_3)_2$, $W_3$ Methyl oder Phenyl und $W_4$ Wasserstoff, Methyl, Aethyl oder Octyl ist, verwendet.

10. Verfahren gemäss Anspruch 9, dadurch gekennzeichnet, dass man den gelben Farbstoff der Formel

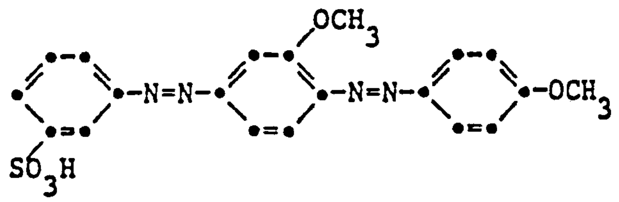

(15) ,

oder den orangen Farbstoff der Formel

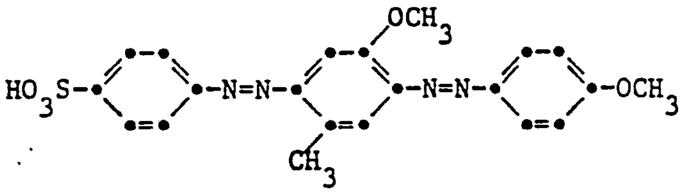

(16)

oder eine Mischung des gelben Farbstoffes der Formel (15) mit dem orangen Farbstoff der Formel (16), oder eine Mischung der Farbstoffe der Formeln (15) und/oder (16) mit dem Farbstoff der Formel

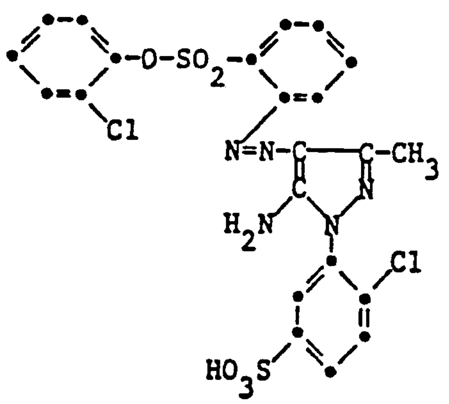

(17) ,

verwendet, wobei das Gewichtsverhältnis der Farbstoffe der Formeln (15) und (16) 60:40 bis 40:60 und insbesondere 1:1 und das Verhältnis der Farbstoff der Formeln (15) oder (16) und (17) 80:20 bis 20:80 und insbesondere 70:30 ist, und das Gewichtsverhältnis der Farbstoffe der Formeln (15), (16) und (17) 60:20:20, 20:60:20 bis 20:20:60 und insbesondere 1:1:1 ist, oder den gelben Farbstoff der Formel

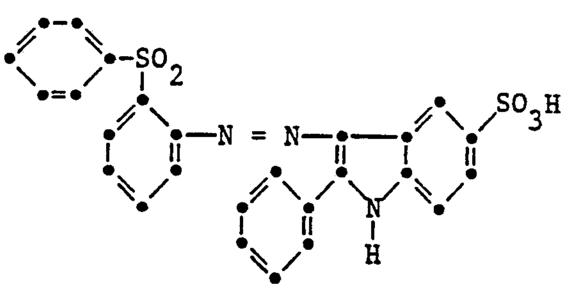

(18).

verwendet.

11. Verfahren gemäss Anspruch 1, dadurch gekennzeichnet, dass man einen blauen Farbstoff der Formel (10), (11), (12) oder (13) oder eine Mischung der Farbstoff der Formeln (11) und (13) in Gewichtsverhältnis von insbesondere 70:30 mit einem roten Farbstoff der Formeln

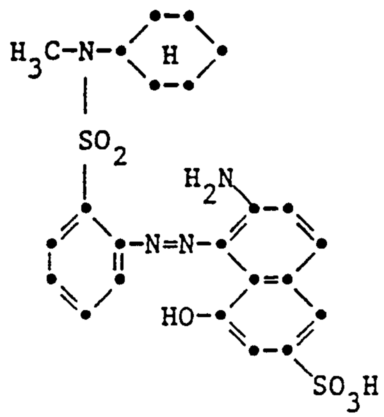

(19) ,

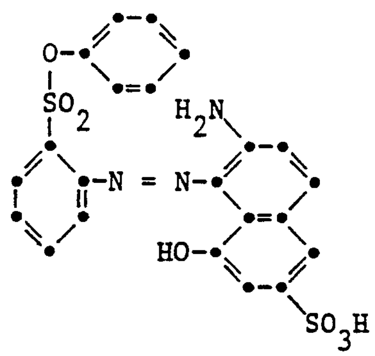

(20) oder

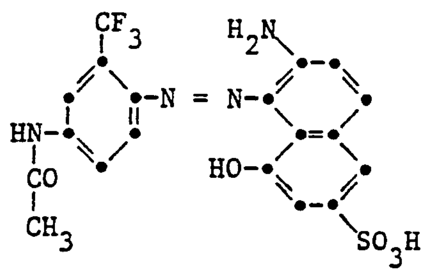

(21)

und den gelben Farbstoff der Formel (15), (16) oder (18) oder der Mischung der gelben Farbstoffe der formeln (15) und (17) im Gewichtsverhältnis 70:30 verwendet.

12. Verfahren gemäss Anspruch 11, dadurch gekennzeichnet, dass man einen der blauen Farbstoffe der Formeln (10) oder (11) zusammen mit dem roten Farbstoff oder Formel

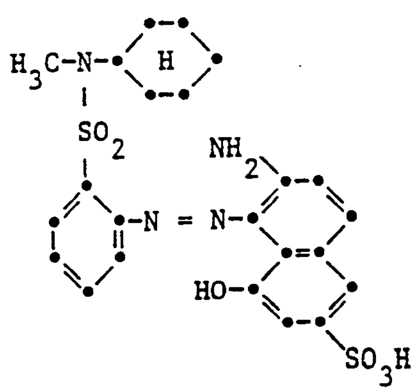

(19)

und dem orangen Farbstoff der Formel

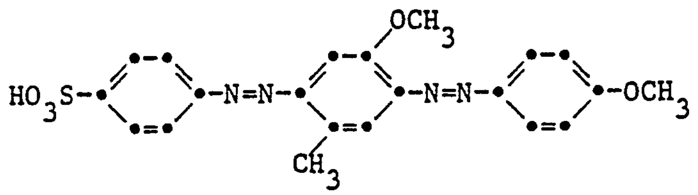 (16)

verwendet.

13. Wässrige Färbeflotte, dadurch gekennzeichnet, dass sie Wasser, die Farbstoffmischung gemäss Anspruch 1 sowie gegebenenfalls weitere Zusätze enthält.

14. Das nach dem Verfahren gemäss Anspruch 1 bzw. unter Verwendung der Färbeflotte gemäss Anspruch 13 gefärbte Polyamid-Material.

15. Das gemäss Anspruch 14 gefärbte Polyamid-Textilmaterial.

16. Die gemäss Anspruch 14 gefärbten Polyamid-Teppiche.

**Revendications**

1. Procédé pour teindre en trichromie, en continu, des matières en polyamide synthétiques, caractérisé en ce que l'on traite ces matières en continu avec un bain de teinture contenant au moins un colorant bleu réactif acec les fibres de formule:

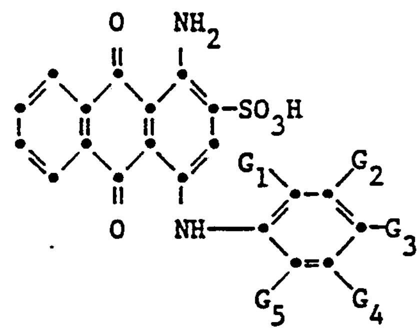 (1)

dans laquelle $G_1$, $G_3$ et $G_5$ représentent des groupes méthyle, $G_4$ représente un groupe α,β-dibromopropionylaminométhyle, α-chloro- ou β-bromoacryloylaminométhyle, β-(β'-sulfatoéthylsulfonyl)-propionylaminométhyle, α,β-dibromopropionylamino, —CH(COOH)—NH—CO—CHBr—$CH_2$Br ou chloracétylaminométhyle et $G_2$ représente l'hydrogène, un groupe sulfo ou chloracétylaminométhyle ou —CH(COOH)—NH—CO—CHBr—$CH_2$Br, ou bien dans laquelle $G_1$ représente l'hydrogène ou un groupe méthoxy, $G_2$, $G_3$ et $G_5$ représentent l'hydrogène et $G_4$ représente un groupe sulfatoéthylsulfonyl, chloracétylamino, α,β-dibromopropionylamino, vinylsulfonyle, 2-méthoxy-4-fluoro-5-triazinylamino ou 2-éthylamino-4-fluoro-s-triazinylamino, ou bien dans laquelle $G_1$, $G_2$, $G_4$ et $G_5$ représentent l'hydrogène et $G_3$ représente un groupe chloracétylamino ou α,β-dibromopropionylamino, 2,6-difluoro-5-chloropyrimidin-4-yl-amino, 2-chloro-4-amino- ou -4-N,N-diméthylamino-s-triazinylamino, ou bien dans laquelle $G_1$ représente un groupe méthyle, $G_2$ représente un groupe β-sulfatoéthylsulfonyle et $G_3$, $G_4$ et $G_5$ représentent l'hydrogène, ou bien dans laquelle $G_1$ ou $G_2$ représente un groupe sulfo, $G_3$ représente un groupe α-bromoacryloylamino ou N-méthyl-N-[3-(β-chloréthylsulfonyl)benzoyl]-amino et $G_2$ ou $G_1$ et $G_4$ et $G_5$ représentent l'hydrogène, ou $G_1$, $G_2$ et $G_5$ représentent l'hydrogène, $G_3$ représente un groupe méthyle et $G_4$ représente un groupe chloracétylamino, ou bien dans laquelle $G_1$ représente un groupe méthyle, $G_2$ un groupe 2,6-difluoro-5-chloropyrimidinylamino, $G_4$ un groupe sulfo et $G_3$ et $G_5$ l'hydrogène, ou au moins un colorant bleu réactif avec les fibres de formule:

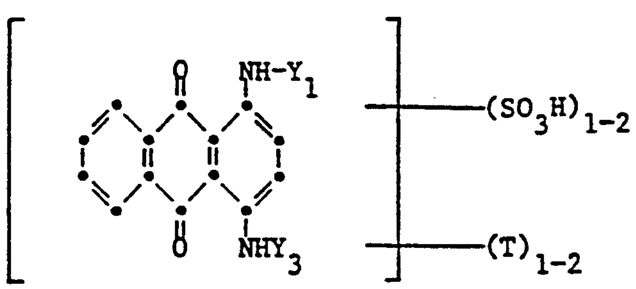 (2) ,

dans laquelle $Y_1$ représente un groupe cyclohexyle, $Y_3$ un groupe 4-(4'-méthylphénoxy)-phényle et T un groupe chloracétylaminométhyle, ce colorant contenant un seul groupe acide sulfonique, ou bien dans laquelle $Y_1$ représente un groupe isopropyle et $Y_3$ représente un groupe phényl-sec-butyl substitué sur le

cycle phényl par des groupes sulfo et chloracétylaminométhyle, ou un radical d'éther diphénylique substitué sur le groupe phénoxy par des groupes sulfo et acryloxyaminométhyle, ou bien dans laquelle $Y_1$ et $Y_3$ représentent chacun un groupe phényl-sec-butyle substitué sur le cycle phényle par des groupes sulfo et chloracétylaminométhyle, ou bien dans laquelle $Y_1$ et $Y_3$ représentent chacun un groupe 4-α-bromo-acryloylamino-3-sulfophényle, avec au moins un colorant rouge de formule:

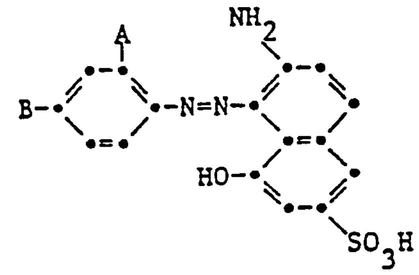

(3) ,

dans laquelle A représente l'hydrogène, un groupe alkyle en $C_1$—$C_4$ éventuellement substitué, un groupe

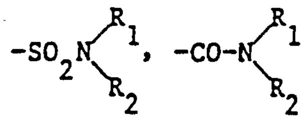

ou $-SO_2R_3$

dans lesquels $R_1$ représente un groupe alkyle en $C_1$—$C_4$, $R_2$ un groupe cycloalkyle en $C_5$—$C_7$ éventuellement substitué ou un groupe phényle éventuellement substitué et $R_3$ un groupe phényle éventuellement substitué ou phénoxy éventuellement substitué, et B représente l'hydrogène, un halogène, un groupe alcanoylamino en $C_2$—$C_4$, (cycloalkoxy en $C_5$—$C_8$)-carbonylamino, (alcoxy en $C_1$—$C_4$)-carbonylamino, alkylsulfonylamino en $C_1$—$C_4$ ou phénylsulfonylamino éventuellement substitué, et au moins un colorant jaune ou orangé répondant à l'une des formules:

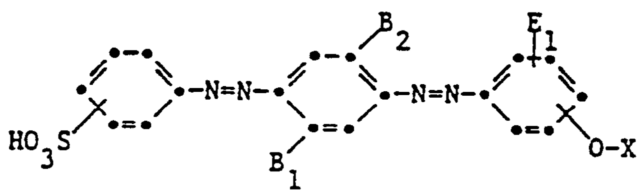

(4) ,

dans laquelle $B_1$, $B_2$ et $E_1$ représentent l'hydrogène, des groupes alkyle en $C_1$—$C_4$ ou alcoxy en $C_1$—$C_4$ et X représente un groupe alkyle à chaîne droite ou ramifiée en $C_1$—$C_4$ ou hydroxyalkyle à chaîne droite ou ramifiée en $C_2$—$C_4$, ou:

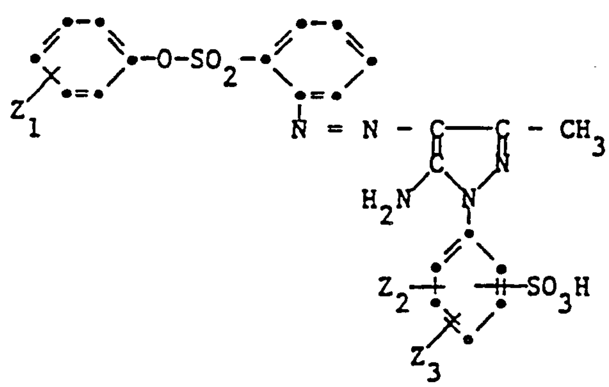

(5) ,

dans laquelle $Z_1$, $Z_2$ et $Z_3$ représentent chacun, indépendamment les uns des autres, l'hydrogène, un halogène, un groupe alkyle en $C_1$—$C_4$ ou alcoxy en $C_1$—$C_4$, ou des mélanges des colorants de formules (4) et (5), ou bien un colorant jaune de formule:

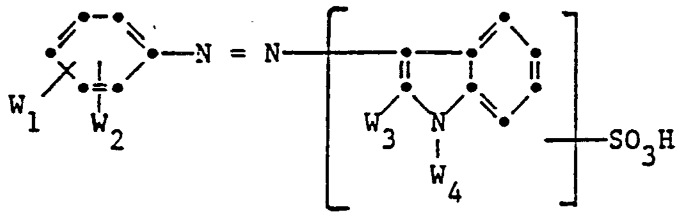

(6) ,

dans laquelle $W_1$ représente l'hydrogène, un groupe alkyle en $C_1$—$C_4$, en $C_1$—$C_4$, un halogène, un groupe alcanoylamino en $C_2$—$C_4$ ou un groupe arylsulfonyle, aryloxy ou arylcarbonyle éventuellement substitué, $W_2$ représente l'hydrogène, un halogène, un groupe alkyle, aryloxy ou aryloxysulfonyle éventuellement substitué ou un groupe de formule

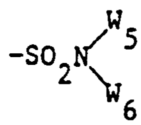 ou 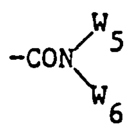 ,

W représente un groupe alkyle ou aryle éventuellement substitué, $W_4$ l'hydrogène ou un groupe alkyle et $W_5$ et $W_6$ représentent chacun, indépendamment l'un de l'autre, l'hydrogène ou un groupe alkyle, cycloalkyle ou aryle éventuellement substitué, ainsi que de l'eau et le cas échéant d'autres additifs.

2. Procédé selon la revendication 1, charactérisé en ce que l'on utilise les colorants bleus de formules:

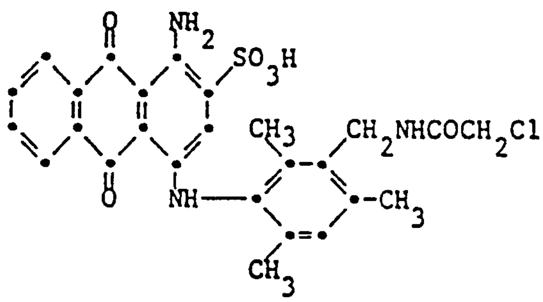

(10) ,

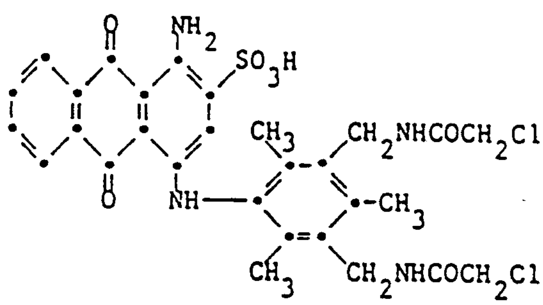

(11) ,

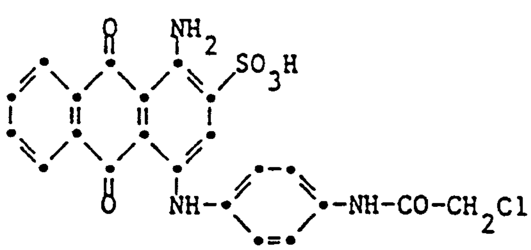

(12) ,

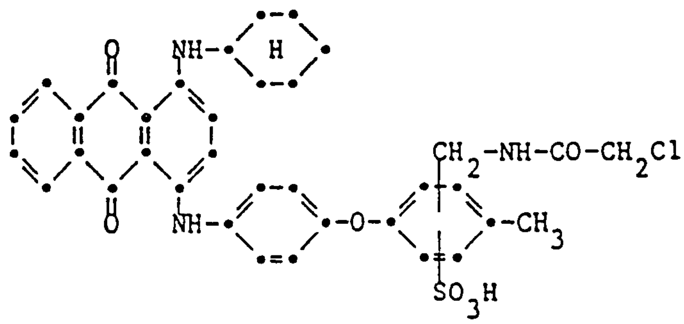

(13)

3. Procédé selon la revendication 1, caractérisé en ce que l'on utilise des mélanges de deux colorants anthraquinoniques tels que définis dans la revendication 1.

4. Procédé selon la revendication 3, caractérisé en ce que l'on utilise un mélange dont l'un des composants est un colorant de formule (1), (10) ou (11) et l'autre le colorant de formule:

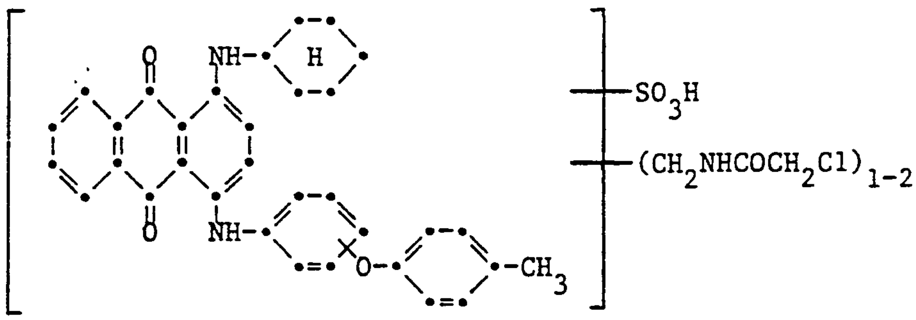

(14)

5. Procédé selon l'une des revendications 1 et 3, caractérisé en ce que l'on utilise des colorants contenant un seul groupe sulfo qui répondent à la formule (2).

6. Procédé selon la revendication 1, caractérisé en ce que l'on utilise au moins un colorant rouge de formule (3) dans laquelle A représente l'hydrogène, un groupe méthyle, trifluorométhyle,

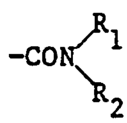 , 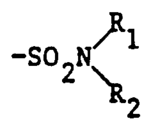 ou $-SO_2R_3$

dans lesquels $R_1$ représente un groupe méthyle ou éthyle, $R_2$ un groupe cyclohexyle ou phényle et $R_3$ un groupe phényle, méthylphényle, phénoxy ou chlorophénoxy, et B représente l'hydrogène, le chlore, un groupe acétylamino, propionylamino, cyclohexyloxycarbonylamino, phénylsulfonylamino ou méthylphénylsulfonylamino, sous réserve que A et B ne peuvent représenter tous deux l'hydrogène simultanément.

7. Procédé selon la revendication 6, caractérisé en ce que l'on utilise un colorant rouge de formule (3) dans laquelle A représente l'hydrogène, un groupe N-méthyl-N-cyclohexylsulfamoyl, phénylsulfonyle, N-éthyl-N-phénylsulfamoyle, phénoxysulfonyle ou trifluorométhyle et B représente l'hydrogène, un groupe acétylamino ou cyclohexyloxycarbonylamino.

8. Procédé selon la revendication 7, caractérisé en ce que l'on utilise un colorant rouge de formule (3) dans laquelle A représente l'hydrogène et B un groupe acétylamino ou cyclohexyloxycarbonylamino, ou bien A représente un groupe trifluorométhyle et B un groupe acétylamino, ou bien A représente un groupe phénylsulfonyle, N-méthyl-N-cyclohexylsulfamoyle, N-éthyl-N-phénylsulfamoyle ou phénoxysulfonyle et B l'hydrogène.

9. Procédé selon la revendication 1, caractérisé en ce que l'on utilise au moins un colorant jaune ou orangé de formule

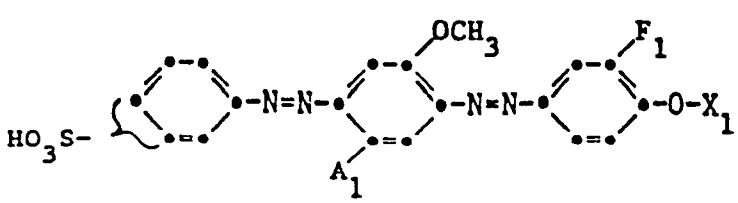

(7) ,

dans laquelle $A_1$ représente l'hydrogène ou un groupe méthyle, $F_1$ représente l'hydrogène ou un groupe méthyle et $X_1$ un groupe méthyle, éthyle, β-hydroxyéthyle, β-hydroxypropyle, β-hydroxybutyle ou α-éthyl-β-hydroxyéthyle, on bien un mélange d'au moins un colorant de formule (7) et d'un colorant jaune de formule:

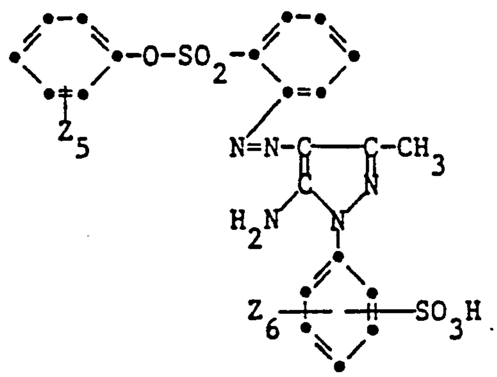

(8) ,

dans laquelle $Z_5$ et $Z_6$ représentent chacun, indépendamment l'un de l'autre, l'hydrogène, un groupe méthyle ou le chlore, ou un colorant jaune de formule:

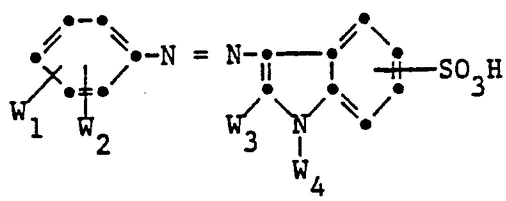

(9) ,

dans laquelle $W_1$ représente l'hydrogène, un groupe méthyle, le chlore, un groupe méthoxy, éthoxy, o-méthylphénoxy, phénoxy, acétylamino, phénylsulfonyle, p-méthylphénylsulfonyle, p-chlorophénylsulfonyle, naphtylsulfonyle, p-méthylbenzoyle ou p-chlorobenzoyle, $W_2$ représente l'hydrogène, le chlore, un groupe méthyle, trifluorométhyle, o-méthylphénoxy, o-chlorophénoxy, o-chlorophénoxysulfonyle, $-SO_2NH_2$, N-(alkyl en $C_1$—$C_2$)-aminosulfonyle, N,N-diméthylaminosulfonyle, N-méthyl-N-β-hydroxyéthylaminosulfonyle, N-méthyl-N-cyclohexylaminosulfonyle, N-phénylaminosulfonyle, N-o-méthylphénylaminosulfonyle, N-o-chlorophénylaminosulfonyle, N-m-trifluorométhylphénylaminosulfonyle, N-éthyl-N-phénylaminosulfonyle, $-CONH_2$ ou $-CON(CH_3)_2$, $W_3$ représente un groupe méthyle ou phényle et $W_4$ l'hydrogène, un groupe méthyle, éthyle ou octyle.

10. Procédé selon la revendication 9, caractérisé en ce que l'on utilise le colorant jaune de formule:

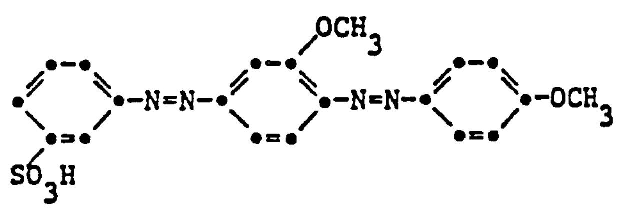

(15) ,

ou le colorant orangé de formule:

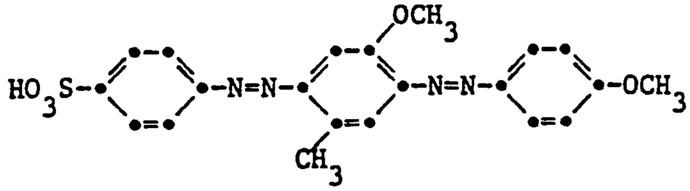

(16)

ou un mélange du colorant jaune de formule (15) avec le colorant orangé de formule (16), ou un mélange des colorants de formules (15) et/ou (16) avec le colorant de formule:

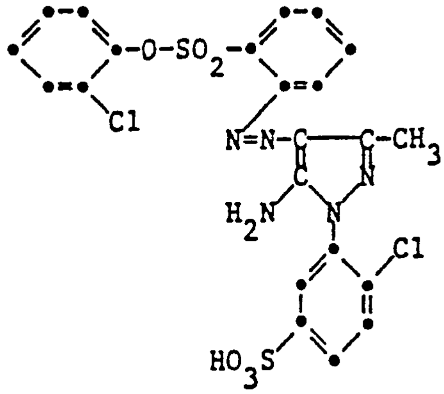

(17) ,

le rapport en poids des colorants de formules (15) et (16) étant de 60:40 à 40:60 et plus spécialement de 1:1, le rapport en poids des colorants de formules (15) ou (16) et (17) étant de 80:20 à 20:80, plus spécialement de 70:30, le rapport en poids des colorants de formules (15), (16) et (17) étant de 60:20:20, 20:60:20 à 20:20:60 et plus spécialement de 1:1:1, ou bien le colorant jaune de formule:

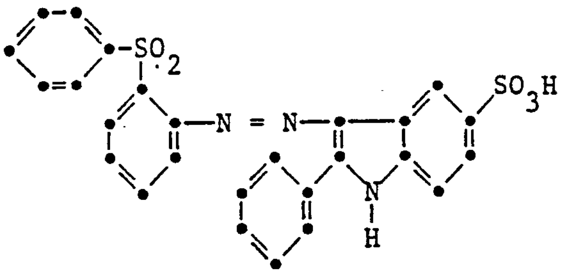

(18).

11. Procédé selon la revendication 1, caractérisé en ce que l'on utilise un colorant bleu de formule (10), (11), (12) ou (13) ou un mélange des colorants de formules (11) et (13) dans le rapport pondéral de en particulier 70:30, avec un colorant rouge répondant à l'une des formules:

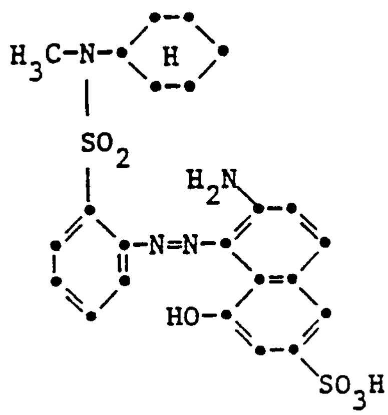

(19) ,

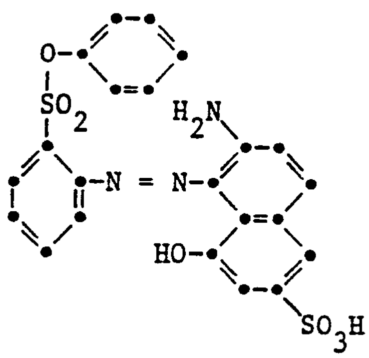

(20) ou

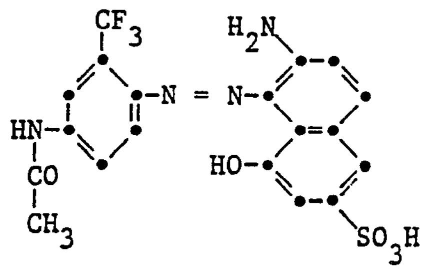

(21)

et le colorant jaune de formule (15), (16) ou (18) ou le mélange des colorants jaunes de formules (15) et (17) dans le rapport en poids de 70:30.

12. Procédé selon la revendication 11, caractérisé en ce que l'on utilise l'un des colorants bleus de formule (10) ou (11) avec le colorant rouge de formule:

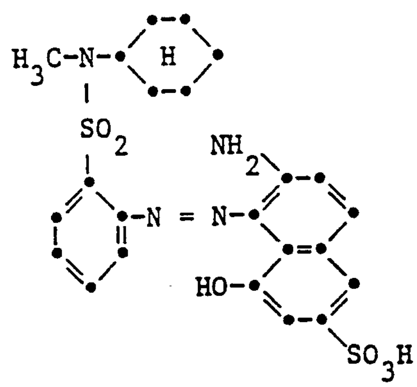

(19)

et le colorant orangé de formule:

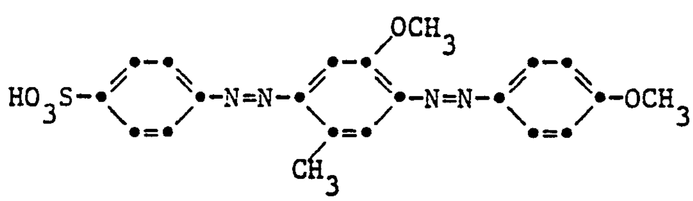

(16) ,

13. Bain de teinture aqueux, caractérisé en ce qu'il contient de l'eau, le mélange de colorants selon la revendication 1 et le cas échéant d'autres additifs.

14. Matière en polyamide teinte par le procédé selon la revendication 1 ou par utilisation du bain de teinture selon la revendication 13.

15. Matière textile en polyamide teinte selon la revendication 14.

16. Tapis en polyamide teint selon la revendication 14.

**Claims**

1. A process for the continuous trichromatic dyeing of synthetic polyamide materials which comprises continuously treating these materials with a dyeing liquor which contains at least one fibre-reactive blue dye of the formula

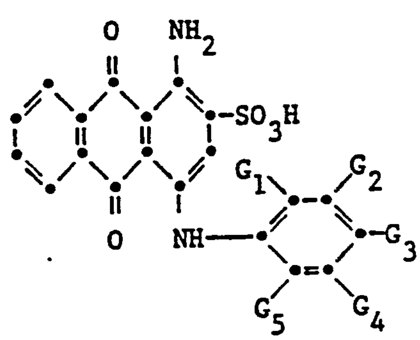

(1) ,

in which $G_1$, $G_3$ and $G_5$ are each methyl, $G_4$ is α-chloroacryloylaminomethyl, α-bromoacryloylaminomethyl, α,β-dibromo propionylaminomethyl, β-(β'-sulfatoethylsulfonyl)-propionylaminomethyl, α,β-dibromo-propionylamino, —CH(COOH)—NH—CO—CHBr—$CH_2$Br or chloroacetylaminomethyl and $G_2$ is hydrogen, sulfo or chloroacetylaminomethyl or —CH(COOH)—NH—CO—CHBr—$CH_2$Br, or in which $G_1$ is hydrogen or methoxy, $G_2$, $G_3$, and $G_5$ are each hydrogen and $G_4$ is sulfatoethylsulfonyl, chloroacetylamino, α,β-dibromopropionylamino, vinylsulfonyl, 2-methoxy-4-fluoro-s-triazinylamino or 2-ethylamino-4-fluoro-s-triazinylamino, or in which $G_1$, $G_2$, $G_4$ and $G_5$ are each hydrogen and $G_3$ is chloroacetylamino, α,β-dibromo-propionylamino, 2,6-difluoro-5-chloropyrimidin-4-ylamino or 2-chloro-4-amino- or 4-N,N-dimethylamino-s-triazinylamino, or in which $G_1$ is methyl, $G_2$ is β-sulfatoethylsulfonyl and $G_3$, $G_4$ and $G_5$ are each hydrogen, or in which $G_1$ or $G_2$ is sulfo, $G_3$ is α-bromoacryloylamino or N-methyl-N-[3-(β-chloroethylsulfonyl)-benzoyl]-amino and $G_2$ or $G_1$ and $G_4$ and $G_5$ are each hydrogen, or $G_1$, $G_2$ and $G_5$ are each hydrogen, $G_3$ is methyl and $G_4$ is chloroacetylamino, or in which $G_1$ is methyl and $G_2$ is 2,6-difluoro-5-chloropyrimidinyl-amino, $G_4$ is sulfo and $G_3$ and $G_5$ are each hydrogen, or at least one fibre-reactive blue dye of the formula

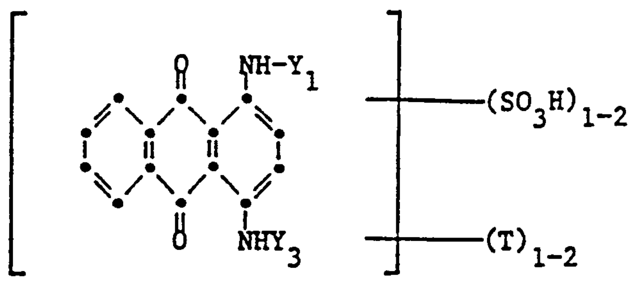

(2) ,

in which $Y_1$ is cyclohexyl, $Y_3$ is 4-(4'-methylphenoxy)-phenyl and T is chloroacetylaminomethyl and the dye contains a single sulfo group, or in which $Y_1$ is isopropyl and $Y_3$ is a phenyl-sec-butyl radical which is substituted in the phenyl ring by sulfo and chloroacetylaminomethyl or is a diphenyl ether radical which is substituted in the phenoxy radical by sulfo and acryloylaminomethyl, or in which $Y_1$ and $Y_3$ both denote a phenyl-sec-butyl radical which is substituted in the phenyl ring by sulfo and chloroacetylaminomethyl, or in which $Y_1$ and $Y_3$ both denote a 4-α-bromoacryloylamino-3-sulfophenyl radical, together with at least one red dye of the formula

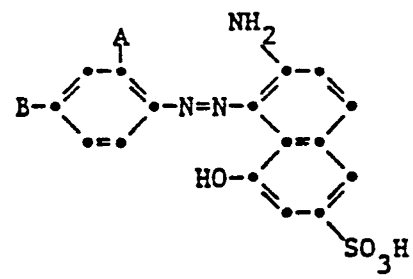

(3) ,

in which A is hydrogen, substituted or unsubstituted $C_{1-4}$ alkyl, or —$SO_2R_3$, where $R_1$ is $C_{1-4}$-alkyl, $R_2$ is substituted or unsubstituted $C_{5-7}$cycloalkyl or substituted or unsubstituted phenyl, and $R_3$ is substituted or unsubstituted phenyl or substituted or unsubstituted phenoxy, and B is hydrogen, halogen, $C_{2-4}$-alkanoylamino, $C_{5-8}$cycloalkoxycarbonylamino, $C_{1-4}$alkoxycarbonylamino, $C_{1-4}$-alkylsulfonylamino or substituted or unsubstituted phenylsulfonylamino, and with at least one yellow or orange dye of the formulae

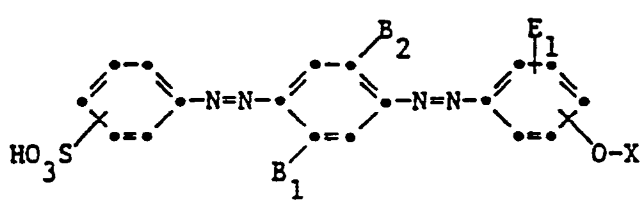

(4) ,

in which $B_1$, $B_2$ and $E_1$ are each hydrogen, $C_{1-4}$alkyl or $C_{1-4}$alkoxy and X is straight-chain or branched $C_{1-4}$alkyl or straight-chain or branched $C_{2-4}$hydroxyalkyl, or

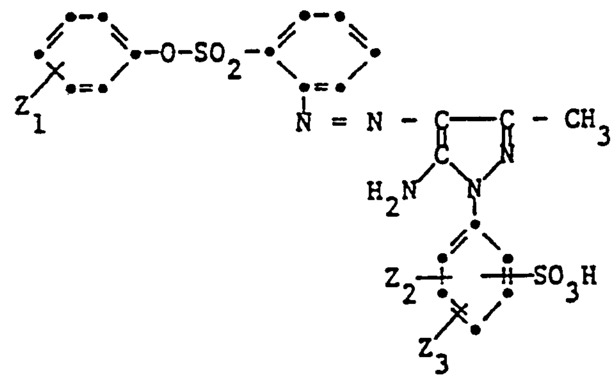

(5) ,

in which $Z_1$, $Z_2$ and $Z_3$, independently of one another are each hydrogen, halogen, $C_{1-4}$alkyl or $C_{1-4}$alkoxy, or mixtures of dyes of the formulae (4) and (5), or a yellow dye of the formula

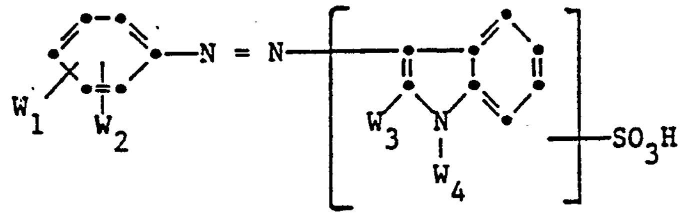

(6) ,

in which $W_1$ is hydrogen, $C_{1-4}$alkyl, $C_{1-4}$alkoxy, halogen, $C_{2-4}$alkanoylamino or a substituted or unsubstituted arylsulfonyl, aryloxy or arylcarbonyl radical, $W_2$ is hydrogen, halogen, a substituted or unsubstituted alkyl, aryloxy or aryloxysulfonyl radical or a radical of the formula

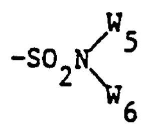 or 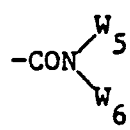 ,

$W_3$ is a substituted or unsubstituted alkyl or aryl radical, $W_4$ is hydrogen or alkyl and $W_5$ and $W_6$, independently of one another, are each hydrogen or a substituted or unsubstituted alkyl, cycloalkyl or aryl radical, and which contains water and can, if desired, also contain further additives.

2. A process according to claim 1, wherein the blue dyes of the formulae

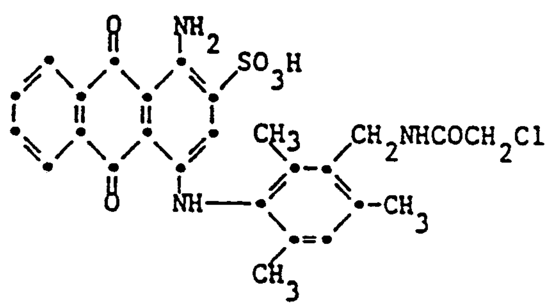

(10) ,

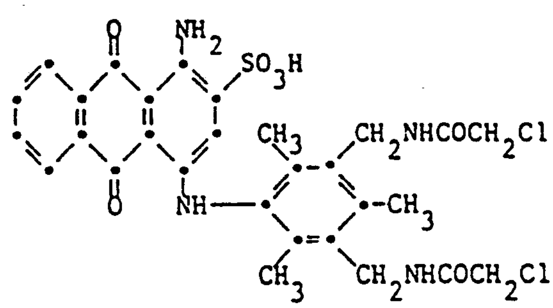

(11) ,

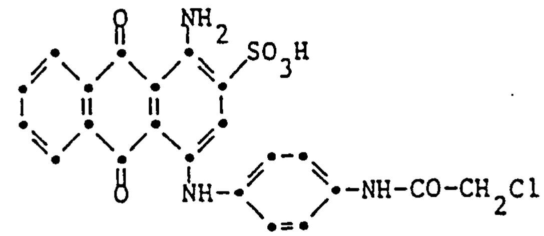 (12) ,

or

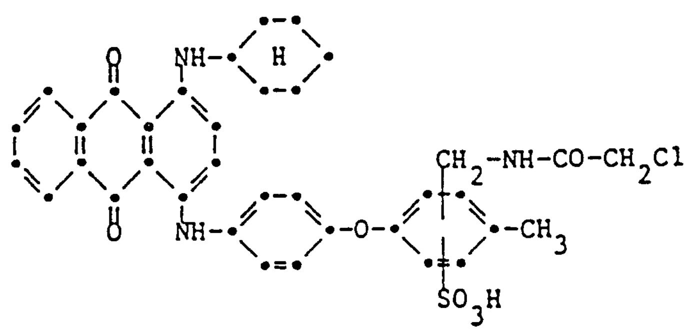 (13)

are used.

3. A process according to claim 1, wherein mixtures of two anthraquinone dyes according to the definition given in claim 1 are used.

4. A process according to claim 3, wherein use is made of a mixture in which one component conforms to a dye of the formula (1), (10) or (11) and the other component conforms to the dye of the formula.

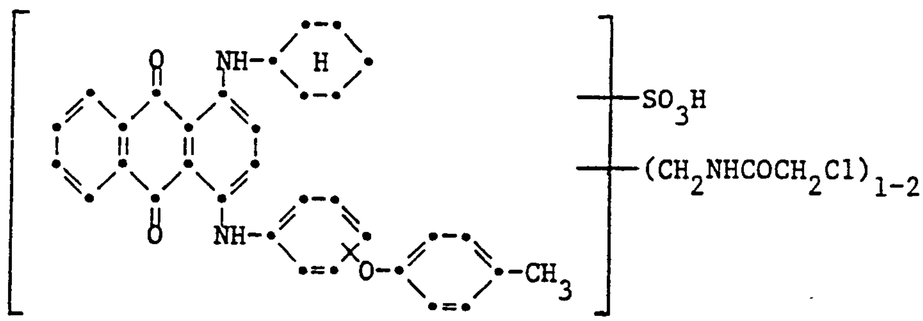 (14)

5. A process according to either of claims 1 and 3, wherein monosulfo-containing dyes of the formula (2) are used.

6. A process according to claim 1, wherein use is made of at least one red dye of the formula (3) in which A is hydrogen, methyl, trifluoromethyl,

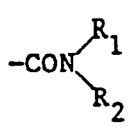 , 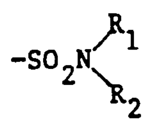 or $-SO_2R_3$

where $R_1$ is methyl or ethyl, $R_2$ is cyclohexyl or phenyl and $R_3$ is phenyl, methylphenyl, phenoxy or chlorophenoxy, and B is hydrogen, chlorine, acetylamino, propionylamino, cyclohexyloxycarbonylamino, phenylsulfonylamino or methylphenylsulfonylamino, A and B not being hydrogen at the same time.

7. A process according to claim 6, wherein use is made of a red dye of the formula (3) in which A is hydrogen, N-methyl-N-cyclohexylsulfamoyl, phenylsulfonyl, N-ethyl-N-phenylsulfamoyl, phenoxysulfonyl or trifluoromethyl and B is hydrogen, acetylamino or cyclohexyloxycarbonylamino.

8. A process according to claim 7, wherein use is made of a red dye of the formula (3) in which A is hydrogen and B is acetylamino or cyclohexyloxycarbonylamino or A is trifluoromethyl and B is acetylamino or A is phenylsulfonyl, N-methyl-N-cyclohexylsulfamoyl, N-ethyl-N-phenylsulfamoyl or phenoxysulfonyl and B is hydrogen.

9. A process according to claim 1, wherein at least one yellow or orange dye of the formula

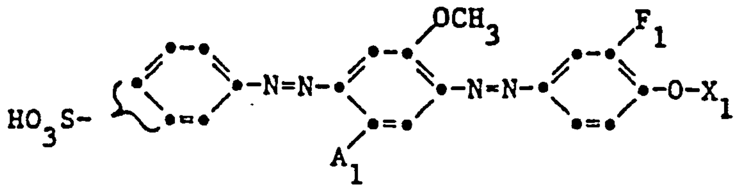

(7) ,

in which $A_1$ is hydrogen or methyl, $F_1$ is hydrogen or methyl and $X_1$ is methyl, ethyl, β-hydroxyethyl, β-hydroxypropyl, β-hydroxybutyl or α-ethyl-β-hydroxyethyl, or a mixture of at least one dye of the formula (7) and a yellow dye of the formula

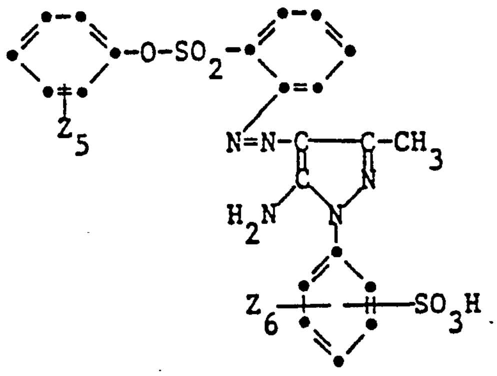

(8) ,

in which $Z_5$ and $Z_6$, independently of one other, are each hydrogen, methyl or chlorine, or a yellow dye of the formula

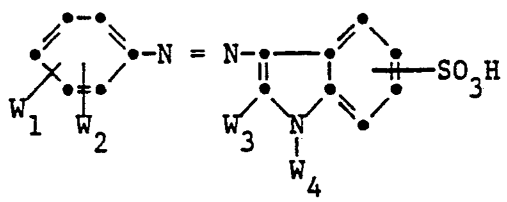

(9) ,

in which $W_1$ is hydrogen, methyl, chlorine, methoxy, ethoxy, o-methylphenoxy, phenoxy, acetylamino, phenylsulfonyl, p-methylphenylsulfonyl, p-chlorophenylsulfonyl, naphthylsulfonyl, p-methylbenzoyl or p-chlorobenzoyl, $W_2$ is hydrogen, chlorine, methyl, trifluoromethyl, o-methylphenoxy, o-chlorophenoxy, o-chlorophenoxysulfonyl, $-SO_2NH_2$, N—$C_{1-2}$alkylaminosulfonyl, N,N-dimethylaminosulfonyl, N-methyl-N-β-hydroxyethylaminosulfonyl, N-methyl-N-cyclohexylaminosulfonyl, N-phenylaminosulfonyl, N-o-methylphenylaminosulfonyl, N-o-chlorophenylaminosulfonyl, N-m-trifluoromethylphenylaminosulfonyl, N-ethyl-N-phenylaminosulfonyl, $-CONH_2$ or $-CON(CH_3)_2$, $W_3$ is methyl or phenyl and $W_4$ is hydrogen, methyl, ethyl or octyl is used.

10. A process according to claim 9, wherein the yellow dye of the formula

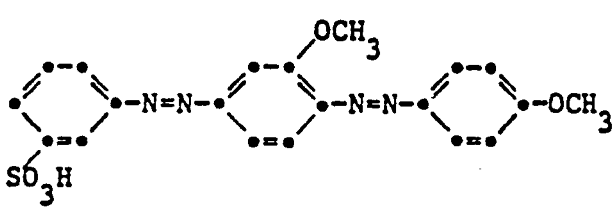

(15) ,

or the orange dye of the formula

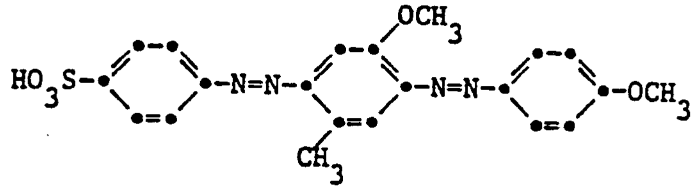

(16)

or a mixture of the yellow dye of the formula (15) with the orange dye of the formula (16), or a mixture of the dyes of formulae (15) and/or (16) with the dye of the formula

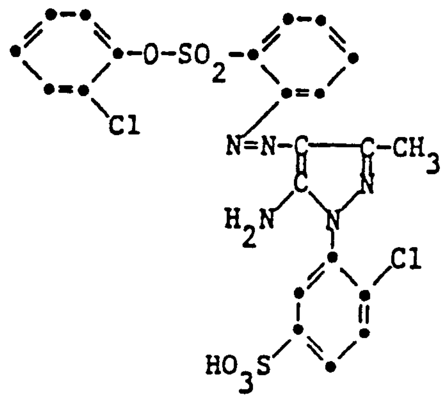

(17) ,

are used in weight ratios of the dyes of formulae (15) and (16) of 60:40 to 40:60 and in particular 1:1 and in ratios of the dyes of the formulae (15) or (16) and (17) of 80:20 to 20:80 and in particular 70:30 and weight ratios of the dyes of the formulae (15), (16) and (17) of 60:20:20, 20:60:20 and 20:20:60 and in particular 1:1:1, or the yellow dye of the formula

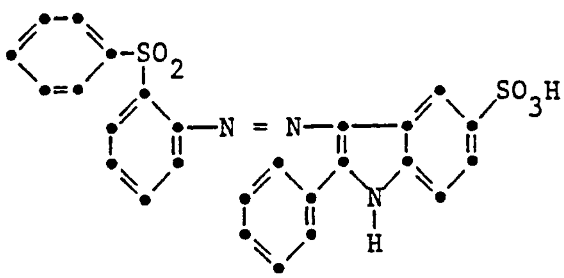

(18).

11. A process according to claim 1, wherein a blue dye of the formula (10), (11), (12) or (13) or a mixture of the dyes of the formulae (11) and (13) is used in weight ratio of in particular 70:30 together with a red dye of the formulae

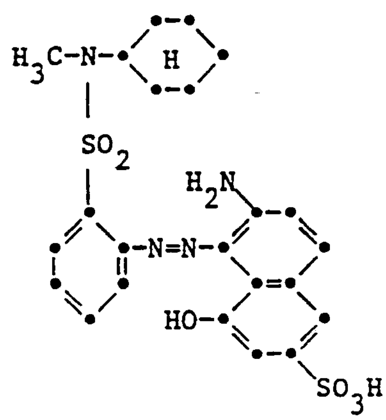

(19) ,

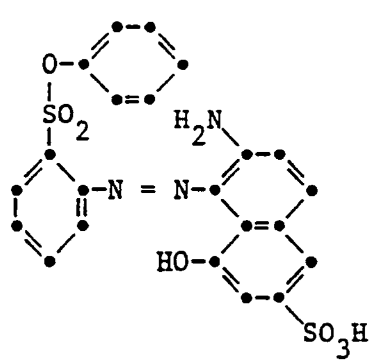

(20) or

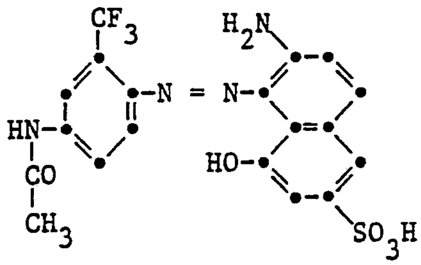

(21)

and the yellow dye of the formula (15), (16) or (18) or the mixture of the yellow dyes of the formulae (15) and (17) in a weight ratio of 70:30.

12. A process according to claim 11, wherein one of the blue dyes of the formulae (10) or (11) is used together with the red dye of the formula

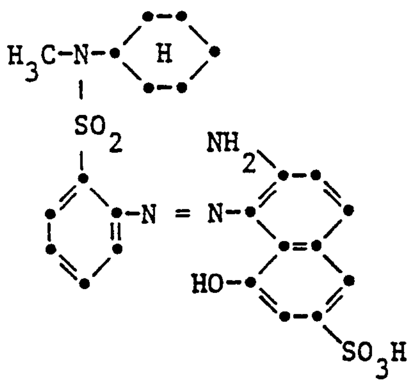

(19)

and the orange dye of the formula

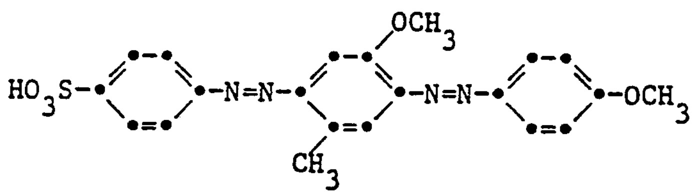

(16) ,

13. An aqueous dyeing liquor which contains water and the mixture of dyes according to claim 1 and can, if desired, also contain further additives.

14. The polyamide material dyed in accordance with the process according to claim 1 or using the dyeing liquor according to claim 13.

15. The nylon textile material dyed according to claim 14.

16. The nylon carpets dyed according to claim 14.